# EUROPÄISCHE PATENTSCHRIFT

(11) **EP 3 219 183 B1**
(45) Veröffentlichungstag und Bekanntmachung des Hinweises auf die Patenterteilung: **30.10.2019**
(21) Anmeldenummer: 17159297.5
(22) Anmeldetag: 06.03.2017
(51) Int. Cl.: A01B 63/10, A01B 79/00, A01B 59/00

(54) **VERFAHREN ZUR BEWIRTSCHAFTUNG VON NUTZFLÄCHEN**
METHOD OF MANAGING FARMLAND
PROCÉDÉ DE GESTION DE TERRAINS

(30) Priorität: 14.03.2016 DE 102016104641
(43) Veröffentlichungstag der Anmeldung: 20.09.2017
(73) Patentinhaber: Wagner, Jürgen, 67159 Friedelsheim (DE)
(72) Erfinder: Wagner, Jürgen, 67159 Friedelsheim (DE)
(74) Vertreter: Stein, Erik

(56) Entgegenhaltungen:
- EP-A1- 1 444 879
- EP-A2- 1 243 171
- WO-A1-02/080652
- DE-U1-202015 005 363
- FR-A1- 2 982 455
- US-A1- 2003 208 311
- US-A1- 2008 060 825
- US-B1- 6 321 851

## Beschreibung

Die Erfindung bezieht sich auf ein Verfahren zur Bewirtschaftung von Nutzflächen im Pflanzenbau mittels eines Zugfahrzeug mit mindestens einer Hydraulikanlage, mindestens zwei Unterlenkern und mindestens einem Oberlenker zur Anhängung mindestens eines Anbaugerätes unter Verwendung mindestens einer von einer Rechnersteuerung angesteuerten Verstelleinrichtung, wobei die Rechnersteuerung mittels mindestens einer an dem Zugfahrzeug und/oder dem Anbaugerät angebrachten Antenne erfasste Ist-Lage- und/oder Ist-Positionsdaten verarbeitet und die Verstelleinrichtung von der Rechnersteuerung derart angesteuert wird, dass das Anbaugerät in einer Soll-Lage zu dem Zugfahrzeug und/oder dem Gelände ausgerichtet wird.

Derartige Verfahren sind aus der DE 20 2015 005 363 U1, EP 1 444 879 A1 oder FR-A-2 982 455 bekannt.

Unter Pflanzenbau ist im Sinne der Erfindung sowohl der planmäßige landwirtschaftliche als auch gartenbauliche Anbau von Nutzpflanzen und Zierpflanzen, also insbesondere von Nahrungspflanzen, Getreide, Kartoffeln, Obst, Gemüse, Futterpflanzen, Marktfrüchten, Zuckerrüben, Medizinalpflanzen, Industriepflanzen, aber auch der Betrieb von Baum- und Rebschulen sowie der Weinbau, zu verstehen.

Im Rahmen der Erfindung verwendete Positions- bzw. Lageangaben beziehen sich in der Regel auf die Längsachse des Zugfahrzeugs und dessen übliche Fahrtrichtung sowie auf einen Untergrund, auf dem sich das Zugfahrzeug befindet.

Zugfahrzeuge mit und ohne gesteuerte Anhängevorrichtungen für Anbau- bzw. Anhängegeräte bilden insbesondere mit Satellitensteuerungen die Grundlage der technischen Automatisierung in der gesamten Landwirtschaft.

Eine so genannte Dreipunkt-Kraftheber-Hydraulik oder Dreipunkthydraulik, ist eine hydraulische Vorrichtung an einem Zugfahrzeug, insbesondere einem Traktor, um Anbaugeräte bzw. Arbeitsgeräte anzukuppeln und gegenüber einem Untergrund anzuheben. Unterseitig sind am Heck des Zugfahrzeugs zwei sich in Längsrichtung, also im Wesentlichen in Fahrtrichtung erstreckende Hebel montiert, die als Unterlenker bezeichnet werden. Die Unterlenker werden an einem Ende am Zugfahrzeug beweglich befestigt und weisen an ihrem freien Ende Befestigungseinrichtungen für die Anbaugeräte auf. An den freien Enden der verschwenkbaren Unterlenker, die die beiden unteren Befestigungspunkte der Dreipunktaufhängung bilden, werden die Anbaugeräte angehängt. Oberhalb der Unterlenker ist mindestens ein weiterer Hebel angebracht, der als Oberlenker bezeichnet wird und dessen nach hinten weisendes freies Ende den dritten Punkt der Dreipunktaufhängung bildet. Der Oberlenker ist häufig als Gewindespindel oder doppeltwirkender Hydraulikzylinder ausgeführt. Durch die Längenveränderung des Oberlenkers lässt sich die Neigung des Anbaugerätes in der Längsachse zum Untergrund einstellen.

Es ist auch bekannt, die Unterlenker mittels mindestens eines seitlich angeordneten Hydraulikzylinders in ihrer Lage relativ zur Längsachse des Zugfahrzeugs zu verschwenken, beispielsweise aus der Gebrauchsmusterschrift DE 20 2015 005 363 U1, der europäischen Patentanmeldung EP 1 444 879 A1 sowie der französischen Patentanmeldung FR 2 982 455 A.

Die Patentschrift US 6,321,851 B1 offenbart eine Alternative zur bekannten Dreipunkthydraulik, bei der anstelle der klassischen Oberlenker und Unterlenker sechs in ihrer Länge verstellbare Gestänge eingesetzt werden, die in Form eines Hexapod gestaltet sind.

In der Praxis stellt es sich heraus, dass beim Fahren an einem Hang in einer Richtung quer zum Gefälle das an dem Zugfahrzeug festgelegte Anbaugerät einen Versatz zur Fahrtrichtung des Zugfahrzeugs aufweist und ein fluchtende Ausrichtung der Mittelachse des Anbaugerätes zur Fahrtrichtung nicht gegeben ist, da das Zugfahrzeug leicht driftet und eine hangaufwärtsgerichtete Ausrichtung einnimmt, die zur Fahrtrichtung winkelversetzt ist. Auf einem nahezu ebenen Feld können auch Unebenheiten vorhanden sein, die ein Einlenken der Zugmaschine auslösen, womit ein Verschwenken zur Grundlinie, also der Ideallinie, einhergeht. Dies mag bei einigen Anbaugeräten in ihrer Funktion eine untergeordnete Rolle spielen, stellt sich aber beispielsweise bei präzise arbeitenden Setz- und Pflanzmaschinen, die orts- und lagegenau, also in exakten Geraden und Querlinien, Pflanzen, Pfähle, Stäbe oder dergleichen in der Erde setzen oder auch Sämaschinen als problematisch dar, da unerwünschte Abweichungen von Soll- und Ist-Lage auftreten. Das positionsgenaue Einsetzen von Pflanzen, Pfählen, Saatgut oder dergleichen, wie es die Erfindung vorschlägt, stellt eine Längs- und Querbewirtschaftung sicher.

Bei einem Anbaugerät kann es sich um ein Pflanz- oder Bearbeitungsgerät oder eine Spritzvorrichtung ein Düngemittelausbringgerät/-maschine oder eine Sägerät/-maschine oder eine Erntemaschine oder ein Bodenbearbeitungsgerät/-maschine oder dergleichen handeln, das bzw. die unmittelbar oder über eine Anhängevorrichtung, die auch als eine Zwischenanhängevorrichtung bezeichnet werden kann, an dem Zugfahrzeug front- oder heckseitig befestigt wird.

Im Weiteren ist es bekannt, bei Sämaschinen, Düngevorrichtungen, Spritzvorrichtungen oder dergleichen, die Ausbringungsmenge zu regeln, indem beispielsweise Austragsschnecken oder Pumpen oder dergleichen entsprechende angesteuert werden, z.B. drehzahl- oder druckgeregelt.

Aus der nicht vorveröffentlichten DE 10 2014 113 448 A ist ein Zugfahrzeug bekannt, das eine Hydraulikanlage und zwei Unterlenker und mindestens einen Oberlenker zur Anhängung eines Anbaugerätes umfasst. Mindestens einem der Unterlenker ist eine in Richtung der Fahrzeuglängsachse ausgerichtete Verstelleinrichtung, die mindestens einen Hydraulikzylinder oder eine elektromotorische Verstelleinrichtung umfasst, zugeordnet. Hierdurch wird eine Steuerung und Mechanik für die rechtwinklige, parallele genaue Linienführung von Anhängegeräten bzw. Maschinen an Zugmaschinen bzw. Traktoren, auch in einem hügeligen Gelände oder an einem Seitenhang sowie auf geraden oder gekrümmten Feldern zur Verfügung gestellt.

Der Erfindung liegt die Aufgabe zugrunde, ein Verfahren der eingangs genannten Art zu schaffen, das eine positionsgenaue Bewirtschaftung von Nutzflächen sowohl in vorgegebenen Längs- als auch Querlinien einer beliebigen befahrbaren Nutzfläche und insbesondere in einem unebenen, insbesondere hügeligen Gelände sicherstellt. Eine weitere Aufgabe der Erfindung ist die Einsparung von insbesondere nitrathaltigen Düngemitteln und von insbesondere glyphosathaltigen Unkrautmitteln.

Erfindungsgemäß wird die Aufgabe durch die Merkmale des unabhängigen Anspruchs gelöst.

Die Unteransprüche steilen vorteilhafte Ausgestaltungen der Erfindung dar.

Bei einem Verfahren zur Bewirtschaftung von Nutzflächen im Pflanzenbau mittels eines Zugfahrzeugs mit mindestens einer Hydraulikanlage, mindestens zwei Unterlenkern und mindestens einem Oberlenker zur Anhängung mindestens eines Anbaugerätes oder einer Anhängevorrichtung zur Kopplung mit mindestens einem Anbaugerät unter Verwendung mindestens einer von einer Rechnersteuerung angesteuerten Versteileinrichtung, verarbeitet die Rechnersteuerung mittels mindestens einer als eine Doppel-Satellitenantenne ausgebildeten und an dem Zugfahrzeug und/oder dem Anbaugerät und/oder Anhängevorrichtung angebrachten Antenne erfasste Ist-Lage- und/oder Ist-Positionsdaten und die Versteileinrichtung wird von der Rechnersteuerung derart angesteuert, dass das Anbaugerät in einer Soll-Lage zu dem Zugfahrzeug und/oder dem Gelände, vorzugsweise entsprechend an der Rechnersteuerung vorgegebener und in einer entsprechenden Speichereinrichtung hinterlegter Soll-Linien, ausgerichtet wird.

In einer Variante des erfindungsgemäßen Verfahrens zur Bewirtschaftung von Nutzflächen im Pflanzenbau
wird das Anbaugerät in einer Soll-Lage zu dem Zugfahrzeug und/oder dem Gelände zur punktuellen Ausgabe von Düngemittel und Unkrautmittel ausgerichtet und/oder angesteuert.

Sonach ist eine punktuelle Ausgabe von Düngemittel und Unkrautmittel möglich, woraus eine enorme Einsparung von Düngemittel, insbesondere Nitrat, und Unkrautmittel, insbesondere Glyphosat, und daraus folgend eine Reduzierung der Belastung der bearbeiteten Böden und Grundwassers resultiert. Insbesondere Nitrat und Glyphosat sind sowohl im Trinkwasser als auch in Nahrungsmitteln nachweisbar und zur Tötung von Lebewesen geeignet.

Selbstverständlich lassen sich sowohl dem Zugfahrzeug als auch dem Anbaugerät oder einer Anhängevorrichtung zur Befestigung zwischen dem Zugfahrzeug und dem Anbaugerät neben einer bedarfsgerechten Anzahl von Hydraulikanlagen auch Pneumatikanlagen sowie elektrische Einrichtungen und dergleichen installieren, um Verstelleinrichtungen und/oder Anbaugeräte anzutreiben.

Hierbei handelt es sich auch um ein Verfahren zum Betreiben eines Zugfahrzeugs mit mindestens einer Hydraulikanlage, mindestens zwei Unterlenkern und mindestens einem Oberlenker zur Anhängung mindestens eines Anbaugerätes oder einer Anhängevorrichtung zur Kopplung mit mindestens einem Anbaugerät mit den Merkmalen des Anspruchs 1.

Im Weiteren ist auch ein Verfahren zur Ansteuerung der mindestens einen Verstelleinrichtung mit dem Ziel der lage- bzw. koordinatendefinierten Bewirtschaftung von Nutzflächen unter den Erfindungsgedanken subsumieren.

Die Verstelleinrichtung kann motorisch, vorzugsweise hydraulisch oder elektrisch oder pneumatisch betrieben, relativ zu der Zugmaschine in ihrer Lage verstellt werden, um beispielsweise einen Ausgleich der Lage des Anbaugerätes zu der Längsachse des Zugfahrzeugs und/oder dem Untergrund zu bewirken, damit das Anbaugerät eine Soll-Lage einhält, insbesondere in Soll-Linien verfahren wird oder Soll-Punkte auf der Nutzfläche ansteuert, um beispielswiese Dünger oder Kompost in vorgegebenen Bahnen, deren Positionen und Maße in Abhängigkeit von der ermittelten Ist-Lage der Nutzfläche und deren Ist-Maße durch die Rechnersteuerung berechnet werden. Die Ist-Lage- und die Ist-Positionsdaten des Anbaugeräte werden bevorzugt mittels Antennentechnik, insbesondere unter Verwendung mindestens einer Doppelantenne, sowie unter Verwendung von Daten von unterschiedlichen Sensoren, die dem Zugfahrzeug bzw. dem Anbaugerät oder der Anhängevorrichtung zugeordnet und mit der Rechnersteuerung verbunden sind, ermittelt und bei der Relativverlagerung des Anbaugerätes zu dem Zugfahrzeug zur Erzielung einer Soll-Lage bzw. Soll-Position von der Rechnersteuerung berücksichtigt.

Hierbei kann die Verstelleinrichtung beispielsweise die beiden Unterlenker derart ansteuern, dass der Abstand der mit dem Anbaugerät oder der Anhängevorrichtung gekoppelten Enden der Unterlenker relativ zu dem Zugfahrzeug verändert, also vergrößert oder verkleinert, wird. Gleichermaßen lassen sich Aufhängungen der Anhängevorrichtung die beispielsweise mit einem Ende der Anhängevorrichtung und mit einem anderen Ende dem Anbaugerät zugeordnet sind, verlagern, um das Anbaugerät positionsgenau entsprechend vorgegebener Soll-Lage- und Soll-Positionsdaten, insbesondere hauptsächlich rechtwinklig zu vorgegebenen Soll-Linien, auszurichten.

Die Verstelleinrichtung kann beispielsweise mindestens einen doppelt wirkenden Hydraulikzylinder oder zwei einfach gegenläufig wirkende Hydraulikzylinder umfassen, wobei jeder der Hydraulikzylinder mit der Hydraulikanlage verbunden ist. Bei einer elektromotorisch betätigten Anordnung kann es sich beispielsweise um eine Mutter und eine damit zusammenwirkende Gewindespindel handeln, die in Richtung der Fahrzeuglängsachse ausgerichtet ist, wobei entweder die Mutter oder die Gewindespindel elektromotorisch ansteuerbar und betätigbar ist.

Die Unterlenker und der mindestens eine Oberlenker sind heckseitig und/oder frontseitig montiert. Die Bearbeitung der Nutzfläche kann sowohl im Schiebebetrieb als auch in Zugbetrieb bei einer Vorwärts- oder Rückwärtsfahrt des Zugfahrzeugs erfolgen.

Im Weiteren sollte zur weiterreichenden Verstellmöglichkeit des Anbaugerätes oder der Anhängevorrichtung relativ zu dem Zugfahrzeug eine Verstelleinrichtung zur hydraulischen, pneumatischen oder elektromotorischen Seitenverschiebung vorgesehen sein, die eine Verlagerung des Anbaugerätes bzw. der Anhängevorrichtung oder eines Teils der Anhängevorrichtung quer bzw. senkrecht zur Fahrtrichtung oder Fahrzeuglängsachse ermöglicht. Eine solche Seitenverschiebung kann insbesondere entweder dem Anbaugerät oder der Anhängevorrichtung oder dem Zugfahrzeug zugeordnet sein und stellt eine rechnergesteuerte Verschiebung aus einer Mittenlage sowohl nach rechts als auch nach links mittels Zylinder-Kolben-Einheiten und/oder Stellspindeln und/oder Linearantrieben und/oder dergleichen motorischer Vorrichtungen sicher. Insgesamt ist eine Ausrichtung durch eine bevorzugt gleichzeitige Verstellung in Fahrtrichtung gesehen sowohl vor und zurück als auch nach rechts oder links möglich. Im Weiteren können mittels entsprechend angesteuerter Antriebsaggregate Verdrehungen sowohl quer als auch längs zur Fahrtrichtung vorgenommen werden, um beispielsweise das Anbaugerät und/oder die Anhängevorrichtung in einem bestimmten Winkel zum Untergrund auszurichten, um beispielsweise waagerechte Terrassen anzulegen oder Pflanzen oder Pfähle lotrecht und positionsgenau zu platzieren, wobei hier auch Informationen von Neigungssensoren oder dergleichen von der Rechnersteuerung verarbeitet werden. Die Verstellbarkeit erfolgt also vorzugsweise in zwei bis vier Achsen.

Durch die Verstellung des Unterlenkers in Richtung der Längsachse wird der Punkt der Befestigung des Anbaugerätes verlagert, so dass das Anbaugerät in seiner Querachse zur Längsachse des Zugfahrzeugs verlagert wird. Bei einer Fahrt an einem Hang quer zu dessen Neigung wird das Zugfahrzeug leicht hangaufwärts gesteuert damit es insgesamt unter Berücksichtigung einer hangabwärts gerichteten Drift eine gewünschte Fahrtrichtung einschlägt. Durch die Verlagerung des Anbaugerätes aufgrund der Verstellung des Unterlenkers lässt sich der hangaufwärts gerichteten Steuerung bzw. Ausrichtung des Zugfahrzeugs entgegenwirken und das Anbaugerät folgt der Fahrtrichtung derart, dass seine Querachse im Wesentlichen rechtwinklig zur Fahrtrichtung, einer idealen Grundlinie, ausgerichtet ist. Bei einem steilen Hang ist eine größere Längenänderung als bei einem flachen Hang, da bei einem steilen Hang auch ein stärkeres Gegenlenken, also eine hangaufwärtsgerichtete Lenkung der Vorderachse bzw. Fahrt, erforderlich ist als bei einem flachen Hang. Durch Versuche vor dem Arbeitsbeginn ist es möglich, eine entsprechende Einstellung des Unterlenkers vorzunehmen. Neben einer einmaligen manuellen Einstellung ist auch vorzugsweise eine geregelte Einstellung des Unterlenkers beispielsweise mittels entsprechender Motoren oder Zylinder-Kolben-Einheiten möglich, die aufgrund ständig ermittelter Messdaten gesteuert werden.

Die Unterlenker sind derart ausgebildet und angeordnet, dass sie durch ihre seitlichen Feststellungen das Anbaugerät und dessen Anhängung nicht in eine absolute Unbeweglichkeit bringen. Durch eine starre Feststellung der Unterlenker wird auch in einem ebenen Gelände bereits durch kleine Lenkbewegungen das Anbaugerät zu einer Verschwenkung gezwungen. Die Unterlenker benötigen eine geringfügige seitliche Beweglichkeit, auf die sich der Fahrer des Zugfahrzeugs beim Lenken einstellen muss, was aber nur in einem besonders flachen Gelände möglich ist. Durch die seitliche Beweglichkeit der Unterlenker weist jede Anhängung eine Eigendynamik auf. Ist die Anhängung seitlich starr ausgebildet, dann ist das Fahrzeug insofern nicht mehr steuerbar, da bei jeder Lenkbewegung die verlängernde Anhängung seitlich ausschlägt.

Selbstverständlich ist es möglich, ein oder mehrere Anbaugeräte unmittelbar oder mittels mindestens einer Anhängevorrichtung an dem Zugfahrzeug frontseitig und/oder heckseitig und/oder seitlich zu befestigen, um diese gegebenenfalls auch gleichzeitig zum Einsatz zu bringen.

Bei der Erfindung handelt es sich um ein Regulationsverfahren, mit dem von Zugmaschinen/Traktoren gezogene Geräte/Maschinen steuerungstechnisch, automatisch, mechanisch rechtwinkelig zu Reihenlinien gestellt bzw. ausgerichtet und linientreu geführt werden.

Zur Weitergehenden Ausrichtung des Anbaugerätes, das beispielsweise als eine Setzmaschine für Pflanzen, Pfosten oder dergleichen ausgebildet sein kann, verdreht vorteilhafterweise die Verstelleinrichtung des Zugfahrzeugs und/oder der Anhängevorrichtung das Anbaugerät zumindest um die Längsachse des Zugfahrzeugs. Sonach ist es möglich, Pflanzen, Pfosten oder dergleichen beispielsweise lotrecht in den Untergrund einzubringen. Bevorzugt erfolgen Drehbewegungen in zwei Achsen, nämlich um eine Achse, die durch die Hauptbewegungsrichtung, insbesondere die Fahrtrichtung entlang einer Soll-Linie, vorgegeben ist und eine insbesondere rechtwinklig dazu ausgerichtete Achse.

Da die Rechnersteuerung vorzugsweise Daten eines Satelliten-Navigationssystems, mindestens eines Neigungssensors und/oder eines Drehraten-Sensors oder dergleichen, beispielsweise auch Informationen bildgebender Sensoren, verarbeitet und mindestens einen Aktor des Anbaugeräts und/oder die Verstelleinrichtung ansteuert, werden die Ist-Daten des Zugfahrzeugs und/oder des Anbaugerätes sehr genau ermittelt und durch die Ansteuerung des Aktors des Anbaugeräts ist es möglich, beispielsweise Dünger oder Saatgut oder Pflanzenspritzmittel über die Satellitensteuerung punktgenau bzw. in sogenannten Oasen und in vorgegebener Dosierung auszubringen. Ebenso ist ein punktgenaues Bepflanzen der Nutzfläche mit Samen und Setzligen möglich, indem der Aktor des entsprechenden Anbaugerätes den Samen oder Setzling in der vorgegebenen Soll-Position ausgerichtet in den Untergrund einbringt. Sonach ist ein punkgenaues Ausbringen und auch insbesondere rechtwinkliges sowie gegebenenfalls dosiertes Ausbringen beispielsweise von Düngemitteln oder Kompost oder Saatgut oder dergleichen möglich und ein geometrisch exaktes bearbeiten der Nutzflächen sowie deren Aufteilung ist sichergestellt. Auch eine Folgebearbeitung der Nutzfläche lässt sich einfach realisieren, indem die Positionen an denen sich beispielsweise Pflanzen befinden, gespeichert werden und zu einem späteren Zeitpunkt, zu der eine Bearbeitung oder Ernte oder dergleichen erforderlich ist, die gespeicherten Positionen in einem hügeligen Geländer unter vorhandener Drift des Zugfahrzeugs insbesondere an einem Seitenhang, während der gesamten Vegetationsperiode exakt angefahren werden, indem zum einen die Zugmaschine und zum anderen das Anbaugerät bzw. die Anhängevorrichtung mit dem Anbaugerät in die der Pflanze oder der Pflanzreihe entsprechende Position gebracht wird. Im Weiteren kann aufgrund der exakten Aufteilung der Nutzfläche und der genauen Positionsbestimmung eine Bewirtschaftung in zwei, gegebenenfalls drei Achsen eines kartesischen Koordinatensystems erfolgen.

Mittels des Verfahrens nach der Erfindung lässt sich die Austragsmenge an Düngemitteln, Herbiziden und Pestiziden beträchtlich reduzieren und eine damit einhergehende Belastung des Grundwassers vermeiden, da die entsprechenden Mittel punktgenau oder in Gasen und dosiert ausgebracht werden. Ebenfalls lässt sich aufgrund der möglichen Längs- und Querbewirtschaftung lassen sich auch ca. 80 - 90% Unkrautvernichtungsmittel mit dem für Menschen gefährlichem Glyphosat einsparen.

Nach einer Weiterbildung der Erfindung nimmt die Rechnersteuerung anhand der Ist-Lage- und/oder Ist-Positionsdaten und vorgegebener Soll-Daten die Steuerung des Zugfahrzeugs und/oder des Anbaugerätes vor. Somit ist ein rechnergesteuertes positionsgenaues Bearbeiten bzw. Bewirtschaften der Nutzfläche sichergestellt.

Erfindungsgemäß verstellt die Rechnersteuerung zumindest Teile des Anbaugerätes in Abhängigkeit von der Fahrgeschwindigkeit des Zugfahrzeugs derart in ihrer Lage, dass sie für eine vorgegebene Zeit eine ortsfeste Position einnehmen. Beispielsweise kann eine Austragsvorrichtung für Saatgut oder ein Pflanzengreifer einer Pflanzensetzmaschine oder dergleichen derart verschiebbar an dem Anbaugerät gelagert sein, dass eine feste Position so lange beibehalten wird bis die entsprechende Menge Saatgut Düngemittel oder dergleichen an der vorgegebenen Soll-Position ausgebracht bzw. eine Pflanze an der Soll-Position gepflanzt ist, obwohl sich das Zugfahrzeug weiterbewegt. Hierzu kann das Anbaugerät eine entsprechende Linearführung umfassen, der beispielsweise mit der Rechnersteuerung gekoppelte und von dieser angesteuerte Antriebsaggregate zugeordnet sind. Selbstverständlich ist es auch möglich, das gesamte Anbaugerät oder eine Anhängevorrichtung derart fahrgeschwindigkeitsgesteuert relativ zu dem Zugfahrzeug zu bewegen, dass das Anbaugerät oder die Anhängevorrichtung für eine vorgegebene Zeit eine ortsfeste Lage bei gleichzeitiger Bewegung des Zugfahrzeugs einnimmt. Es besteht auch die Möglichkeit Pflanzen, Düngemittel oder Stäbe oder dergleichen mittels der vorhandenen, insbesondere zweiachsigen, Drehvorrichtungen in und auf dem Boden zu platzieren und zwar mit einer satellitengesteuerten Genauigkeit.

In und über die bestimmten Pflanzpunkte wird punktuell oder in kleinen Oasen, zuerst Düngemittel, nach Bodenproben dosiert aufgebracht. Folgend das Saat oder Pflanzgut direkt, oder auch später punktuell gesät, bzw. das Pflanzgut punktuell eingepflanzt. Beispielsweise können Jungreben mit einer satellitengesteuerten Pflanzmaschine, die auch umlaufende Greifer für Pflanzen und/oder Stäbe umfasst, punktgenau, auch in kreuzförmig zueinander verlaufenden Querlinien, in den Boden eingepflanzt werden, wobei in einem weiteren Arbeitsschritt, beispielsweise in genauen parallel zueinander verlaufenden Bahnen Kompost, insbesondere terra preta, abgelegt wird. Hierzu zieht ein Pflanzschar mittig der Soll-Ablage eine Bodenrille und vermischt mit Boden rieselt hinter dem Pflanzschar ein Teil der terra preta bis zu den Wurzeln der gesetzten Pflanzen. Ein Andrücken des Bodens mit Andruckrädern der Pflanzmaschine vermischt nochmals in der Andrucktiefe den Boden mit terra preta Erde, wobei ein Teil der terra preta Erde oben bei der Pflanze bleibt, damit der Oberboden langzeitlich feucht und atmungsaktiv ist.

Dieses automatisierte Verfahren stellt eine sehr wirtschaftliche Dünge- und Einpflanzmethode mit einer enormen Einsparung von Dünge- und Unkrautmittel dar, wobei insbesondere aufgrund der ortsgenauen und wohldosierten Düngung der Wuchs so genannter unerwünschter Beikräuter reduziert wird. Aufgrund der rechtwinkligen Arbeitsweise bei der gesamten Bewirtschaftung der Nutzfläche, zeigt diese in hügeligem Gelände eine nahezu gleiche Leistungsfähigkeit, wie in ebenen Gelände.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die verfahrensgemäß gesteuerte Seitenverschiebung, die im Wesentlichen Rechtwinklig zur Hauptfahrrichtung erfolgt, bewirkt parallele linientreue Pflanzreihen auch in hügeligem Gelände und im Seitenhang, die satellitengesteuert positionierbar sind, wobei aufgrund der Aktorsteuerung des Anbaugerätes auch exakte Pflanzabstände in einer rechtwinkligen Gitterstruktur einhaltbar sind. Durch die satelliten- und sensorgesteuerte Verschiebung des Anbaugerätes ist eine Bearbeitung dicht an den Pflanzen in Längs- und auch Querrichtung möglich.

Beispielsweise in Spalieranlagen, kann mit Arbeitsgeräten und Maschinen, programmiert beidseitig eng an den Pflanzen gewirtschaftet werden. Beispielsweise an der Frontseite des Zugfahrzeugs und zwischen den Achsen und an der Heckseite lassen sich doppelreihige Laubschneider ebenso wie Entblätterungsgeräte zur Bearbeitung von Pflanzen in Spalieranlagen, Geräte für die Bodenbearbeitung, das Mulchen, das Aufbringen von Spritzmittel usw. anbringen. In Abhängigkeit vom Abstand der Pflanzen oder Stäbe oder Pfähle zueinander ist eine Bearbeitung zwischen den Pflanzen, Stäben oder Pfählen ohne deren Berührung durch die Mehrfach- bzw. Mehrachsenverschiebung und -verdrehung der Arbeits- bzw. Anbaugeräte möglich.

Für das programmierte, gesteuerte und punktgenaue Ausbringen von Düngemittel, Kompost, Terra Preta, Saatgut und ähnlichem in kleinen Oasen pro Pflanzstelle und in einer von der Pflanze benötigten Menge wird beispielsweise ein Anbaugerät verwendet, mit Dosierrohren mit verschiedenen Durchmessern verwendet, über denen eine Beschickungsvorrichtung angeordnet ist, wobei entweder durch die Steuerung der Öffnung der Dosierrohre oder die Beschickungsvorrichtung je nach verwendetem Dünger oder Kompost oder Saatgut und zu bewirtschaftender Pflanze vor oder nach der Bepflanzung, automatisch die abzugebende Menge des Düngemittels dosiert wird. Selbstverständlich können auch Abgabeöffnungen gesteuerte Verschlussvorrichtungen zugeordnet werden, die eine zuverlässige Dosierung entsprechend gespeicherter Vorgaben durch das gezielte Öffnen und Schließen der Abgabeöffnungen ermöglichen. Die seitlichen Abstände beispielsweise der Dosierrohre oder der Dosier- bzw. Abgabeöffnungen können auf die Abstände der Pflanzenreihen abgestimmt werden, insbesondere lassen sich die Positionen der Dosierrohre rechnergesteuert einstellen, indem beispielswiese der Lage relativ zueinander mittels entsprechender mechanischer Stelleinrichtungen, beispielsweise in Form von Spindeln und/oder Kolben-/Zylinderanordnungen veränderbar ist. Es ist auch die gesteuerte Abgabe einzelner Saatkörner oder Düngemittelkörner oder dergleichen möglich. Selbstverständlich kann der Kompost vor dem Ausbringen auch zerkleinert werden. Selbstverständlich können Düngemittel- oder Kompost- oder Saatgutbehälter auch Dosierschnecken oder -spindeln zum gezielten und gesteuerten Ausbringen aufweisen. Selbstverständlich ist es möglich, ein Dünge- oder Kompost-Anbaugerät einem Saat-Anbaugerät vorzuordnen, so dass auf einer einzigen Fahrstrecke mehrere Arbeitsgänge ausgeführt werden. In diesem Zusammenhang können auch Bodenbearbeitungsgeräte angekoppelt werden.

Durch die Verlagerung der Unterlenker oder anderer Verstelleinrichtungen für das Anbaugerät ist auch das Anhängen wesentlich vereinfacht, insbesondere, wenn die Anhängung auf schrägem Untergrund steht.

Die im Rahmen der Erfindung zu erzielende Genauigkeit ist, wie sich dem Fachmann selbstverständlich erschließt, unter anderem abhängig von dem Untergrund sowie den erhaltenen Ist-Daten bezüglich der Position und Lage. Bei einem feinporigen porösen Boden lassen sich Abweichungen von beispielsweise +/-2 cm von einer vorgegebenen Soll-Lage erzielen. Im Allgemeinen betragen derartige Toleranzen zwischen 1 und 10 cm, vorzugsweise zwischen 3 und 7 cm, bevorzugt etwa 5 cm.

In weiterer Ausgestaltung bewirkt die Rechnersteuerung eine Höhenverstellung der Unterlenker und/oder des Anbaugerätes und/oder der Anhängevorrichtung mittels zugeordneter Hydraulikzylinder-Anordnungen, die zwischen dem zugeordneten Unterlenker und/oder einer mit dem Unterlenker verbundenen Hubstrebe und einem darüber liegenden Befestigungspunkt bzw. zwischen zwei entsprechend zueinander verlagerbaren bzw. verschiebbaren Rahmenteilen der Anhängevorrichtung angeordnet und Bestandteil einer Verstelleinrichtung sind. Zum Ausgleich einer Höhenlage der Unterlenker und/oder des Anbaugerätes und/oder der Anhängevorrichtung zu dem Untergrund sind die Hydraulikzylinder-Anordnungen bzw. deren zugeordnete Schaltventile mit der Rechnersteuerung gekoppelt, an der entweder Sollwerte für die Höhenverstellung in Relation zu einer Legeverstellung relativ zur Fahrzeuglängsachse anliegen, beispielsweise in der zugeordneten Speichereinrichtung, oder an der von Messsensoren ermittelte Daten bezüglich des Ist-Abstandes zum Untergrund zur Verarbeitung anliegen.

Die Erfindung wird im Folgenden anhand mehrerer Ausführungsbeispiels unter Bezugnahme auf die zugehörige Zeichnung näher erläutert.

Es zeigt:
- Fig. 1: eine schematische Draufsicht auf ein Zugfahrzeug mit einem mittels einer Dreipunkthydraulik daran befestigten Anbaugerät zur Ausführung des Verfahrens nach der Erfindung in einer ersten Darstellung,
- Fig. 2: eine schematische Draufsicht auf das Zugfahrzeug mit dem Anbaugerät nach Fig. 1 in einer alternativen Darstellung,
- Fig. 3: eine schematische Darstellung eines Hecks des Zugfahrzeugs nach Fig. 1 mit Unterlenkern in einer ersten Ausgestaltung,
- Fig. 4: eine schematische Darstellung des Hecks des Zugfahrzeugs nach Fig. 1 mit Unterlenkern in einer zweiten Ausgestaltung,
- Fig. 5: eine schematische Darstellung des Hecks des Zugfahrzeugs nach Fig. 1 mit Unterlenkern in einer dritten Ausgestaltung,
- Fig. 6: eine schematische Darstellung des Hecks des Zugfahrzeugs nach Fig. 1 mit Unterlenkern in einer vierten Ausgestaltung,
- Fig. 7: eine schematische Darstellung des Hecks des Zugfahrzeugs nach Fig. 1 mit Unterlenkern in einer fünften Ausgestaltung,
- Fig. 8: eine schematische Darstellung einer Anhängevorrichtung an dem Heck des Zugfahrzeugs nach Fig. 1 mit Unterlenkern in einer sechsten Ausgestaltung,
- Fig. 9: eine alternative schematische Darstellung der Anhängevorrichtung nach Fig. 8,
- Fig. 10: eine schematische Darstellung der Anhängevorrichtung mit Unterlenkern in einer siebten Ausgestaltung,
- Fig. 11: eine schematische Darstellung der Anhängevorrichtung mit Unterlenkern in einer achten Ausgestaltung,
- Fig. 12: eine schematische Darstellung einer erfindungsgemäßen Anhängevorrichtung,
- Fig. 13: eine schematische Draufsicht auf das Zugfahrzeug mit dem Anbaugerät nach Fig. 2 in einer alternativen Darstellung
- Fig. 14: eine schematische Darstellung von Komponenten zur Durchführung des Verfahrens,
- Fig. 15: eine Darstellung des Zugfahrzeugs mit Anbaugerät auf einer verfahrensgemäß eingeteilten Nutzfläche.
- Fig. 16: eine Teildarstellung eines als Düngemittel- oder KompostAustragsgerät ausgebildeten Anbaugerätes,
- Fig. 17: eine Teildarstellung eines als Sägerät ausgebildeten Anbaugerätes,
- Fig. 18: eine Teildarstellung eines als Bodenbearbeitungsgerät ausgebildeten Anbaugerätes
- Fig. 19: eine Teildarstellung eines als Spritzgerät ausgebildeten Anbaugerätes,
- Fig. 20: eine weitere Teildarstellung des Anbaugerätes nach Fig. 16 und
- Fig. 21: eine vergrößerte schematische Darstellung einer Doppel-Satellitenantenne.

Ein Zugfahrzeug 1 im Sinne der Erfindung ist beispielsweise ein Traktor oder dergleichen Schlepper und wird insbesondere im Bereich der Landwirtschaft, der Forstwirtschaft oder in Garten- und Landschaftsbau oder im Weinbau bzw. Obstanbau oder dergleichen eingesetzt. Das Zugfahrzeug 1 weist eine Vorderachse 2 und eine Hinterachse 3 auf, die jeweils mit Rädern 4 bestückt sind. Im Weiteren umfasst das Zugfahrzeug 1 mindestens eine Hydraulikanlage 5 und/oder eine Druckluftanlage, die über eine mit einem Steuergerät 6 verbundene Ventilsteuerung 7 mit einfach- oder doppeltwirkenden Hydraulikzylindern 8, die Unterlenkern 9 und einem Oberlenker 10 der Dreipunkthydraulik zur Befestigung eines Anbaugerätes 11 gekoppelt sind. Die Unterlenker 9 und der mindestens eine Oberlenker 10 können sowohl vorne als auch hinten am Zugfahrzeug 1 installiert sein. Weist das Zugfahrzeug 1 vorne und hinten Unterlenker 9 und Oberlenker 10 auf, dann können auch zwei Anbaugeräte 11 gleichzeitig verwendet werden. Auch das Anbaugerät 11 weist im vorliegenden Beispiel, aber nicht notwendigerweise, eine Achse 12 mit zwei Rädern 13 auf. Das Anbaugerät 11 lässt sich zumindest in zwei Achsen, die insbesondere senkrecht zueinander und vorzugsweise senkrecht zu einer Soll-Linie 55 verlaufen, verschieben. Besonders bevorzugt ist auch eine Verdrehung des Anbaugerätes 11 um eine oder zwei Achsen möglich, insbesondere gesteuert und möglichst gleichzeitig mit den Verschiebebewegungen. Entsprechende rechnergesteuerte Verstelleinrichtungen 51 können am Zugfahrzeug 1 und/oder an dem Anbaugerät 11 vorgesehen sein.

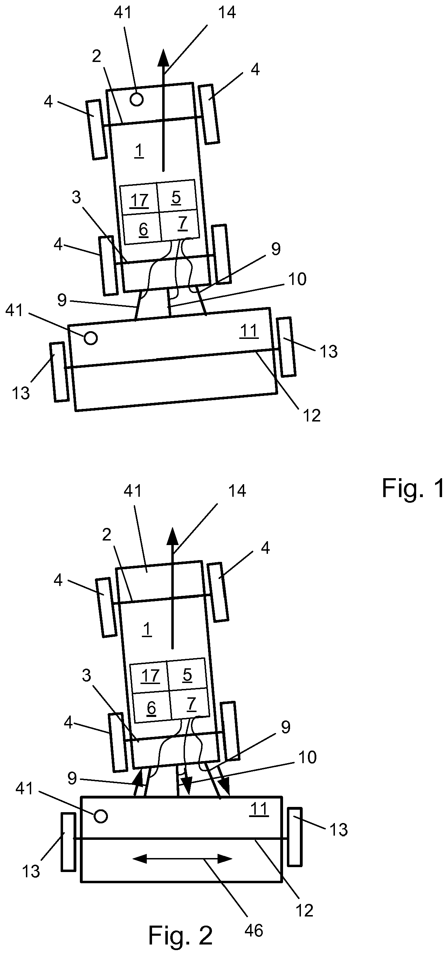

Fig. 1 zeigt das Zugfahrzeug 1 mit dem über Unterlenker 9 der gleichen Länge an dem Zugfahrzeug 1 befestigten Anbaugerät 11, wobei das Zugfahrzeug 1 quer über einen Hang bewegt wird. D.h. das Gefälle des Hangs erstreckt sich von der linken Seite des Zugfahrzeugs 1 zu dessen rechter Seite. Um eine Geradeausfahrt gemäß dem Pfeil 14 zu erzielen, muss das Zugfahrzeug 1 leicht in Richtung der Steigung des Hangs, also nach links, gelenkt werden und es ergibt sich insgesamt eine winkelversetzte Ausrichtung des Zugfahrzeugs 1 mit dem Anbaugerät 11 gegenüber der resultierenden Fahrtrichtung gemäß dem Pfeil 14. Das Anbaugerät 11 wird demnach nicht in einer Arbeitsrichtung bewegt, in der seine Achse 12 senkrecht zu der resultierenden Fahrtrichtung gemäß dem Pfeil 14 ausgerichtet ist, wobei diese Ausrichtung, die auf einem ebenen Untergrund zu erzielen ist, optimal ist. Der Versatz der Achse 12 zu der resultierenden Fahrtrichtung gemäß dem Pfeil 14 führt beispielsweise zu ungenauen Ergebnissen beim Setzen oder Einpflanzen von Pflanzen oder Pflanzstäben in Reihen und/oder Zeilen oder beim Ernten oder bei der Bodenbearbeitung in derartigen Pflanzanlagen oder auch beim Ausbringen von Saatgut, Pflanzen, Düngemitteln oder Kompost.

Um dem unerwünschten Versatz der Achse 12 des Anbaugerätes 11 zu der resultierenden Fahrtrichtung gemäß dem Pfeil 14 zu beseitigen, wird von einer dem Zugfahrzeug 1 oder dem Anbaugerät 11 zugeordneten Rechnersteuerung 50 eine Verstelleinrichtung 51 angesteuert, die beispielsweise zumindest einen der Unterlenker 9 umfasst. Die Rechnersteuerung 50 erfasst mittels mindestens einer Antenne 52 Ist-Lage- und/oder Ist-Positionsdaten sowohl des Zugfahrzeugs 1 als auch des Anbaugerätes 11 und verarbeitet diese Daten, um die Verstelleinrichtung 51 derart anzusteuern, dass das Anbaugerät 11 in einer Soll-Lage zu dem Zugfahrzeug 1 und/oder dem Gelände, insbesondere der zu bearbeitenden Nutzfläche, die vorzugsweise mittels gespeicherter Positionsdaten definiert ist, ausgerichtet wird, und zwar in mindestens einer, bevorzugt in zwei Achsen.

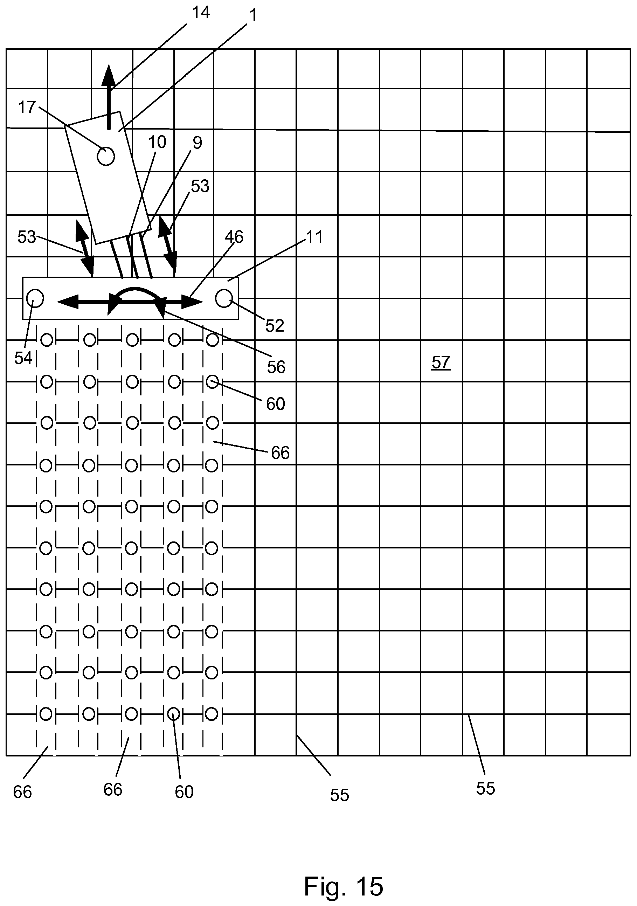

Die rechnergesteuerte Verstelleinrichtung 51 verlagert zumindest einen der Unterlenker 9 gemäß einem der Doppelpfeile 53 in seiner Länge derart, dass die Achse 12 des Anbaugerätes 11 rechtwinklig zu der resultierenden Fahrtrichtung gemäß dem Pfeil 14 ausgerichtet ist, wie Fig. 2 oder 15 zu entnehmen ist. Beispielsweise kann der talseitige Unterlenker 9 verlängert und/oder der bergseitige Unterlenker 9 verkürzt werden. Erfolgt die gegenläufige Längenänderung beider Unterlenker 9, dann sind gegenüber der Längenänderung nur eines der Unterlenker 9 wesentlich kürzere Wege erforderlich, um den gleichen Versatz auszugleichen. Ist ein relativer Versatz auszugleichen, d.h. es ist eine Längenänderung des oder der Unterlenker 9 um einen verhältnismäßig großen Weg erforderlich, dann kann auch der Oberlenker 10, der ebenfalls Bestandteil der Verstelleinrichtung 51 sein kann, in seiner Länge verändert werden, damit das Anbaugerät 11 eine vorgegebene Soll-Lage einnimmt. Die Verstellung des Oberlenkers 10 ist nicht zwingend erforderlich, wenn die Unterlenker 9 auf beiden Seiten des Oberlenkers 10 gegenläufigen Längenänderungen unterliegen, also der eine Unterlenker 9 aus seiner Mittenlage verlängert und der andere Unterlenker 9 verkürzt wird.

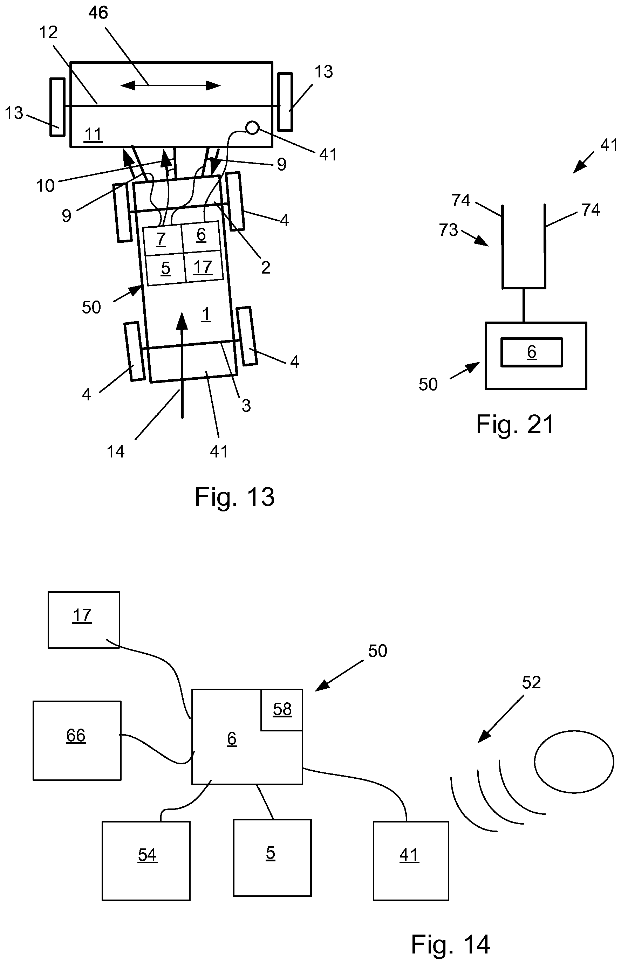

Die Einstellung der Längen der Unterlenker 9 bzw. Oberlenker 10 erfolgt mittels der zugeordneten Hydraulikzylinder 8 rechnergesteuert, indem eine entsprechend gekoppelte Hydraulikpumpe mit zugeordneter Ventiltechnik bedarfsgerecht angesteuert wird. Hierbei wird die exakte Lage des Anbaugeräts 11 anhand von Signalen von insbesondere als Satellitenantennen 41, erfindungsgemäß als Doppel-Satellitenantennen 73, ausgebildeten Antennen 52, sowie unterschiedlicher Daten von Sensoren, insbesondere von Neigungssensoren 17 oder Gyroskopen 54, im jeweiligen Gelände ermittelt, wobei selbstverständlich sowohl die als so genannte Dipol-Antennen ausgebildeten Antennen 52 als auch deren zugeordnete Messgeräte und die Sensoren mit der Rechnersteuerung 50 zur Verarbeitung der erfassten Daten gekoppelt sind. Die Betätigung der Hydraulikzylinder 8 erfolgt in Abhängigkeit der ermittelten und von der Rechnersteuerung 50 verarbeiteten Daten, die beispielsweise zur Weiterverarbeitung in Steuer- bzw. Regelsignale für die Ventilsteuerung 7 der Hydraulikanlage 5 und auch zur autonomen Fahrt des Zugfahrzeugs 1 an dem Steuergerät 6 anliegen. Die Datenverarbeitung erfolgt vorzugsweise zur Ermittlung möglichst genaue Ist-Daten bezüglich der Neigung des zu befahrenden Geländes bzw. des Zugfahrzeugs 1 bzw. der Lage des Zugfahrzeugs 1 relativ zu einer Soll-Lage im Gelände sowie einer Lage des Anbaugerätes 11 zu einer resultierenden Fahrtrichtung gemäß dem Pfeil 14, um die erforderliche Korrektureinstellung zu errechnen, damit das Anbaugerät 11 auch in einem hügeligen oder geneigten Gelände entlang vorbestimmter Soll-Linien 55 verfahren wird. Bestandteil des Satelliten-Navigationssystems sind vorzugsweise mindestens zwei Satellitenantennen 41, von denen eine beispielsweise vorne am Zugfahrzeug 1, insbesondere im Bereich einer Lenkachse, und die andere an einer Anhängevorrichtung 27 oder dem Anbaugerät 11 befestigt ist. Bedarfsweise können auch mehrere Satellitenantennen 41 sowohl dem Zugfahrzeug 1 auch dem Anbaugerät 11 bzw. der Anhängevorrichtung 27 zugeordnet und mit der Rechnersteuerung 50 zur Datenerfassung und Datenauswertung verbunden werden. Aufgrund des Abstandes zwischen den Satellitenantennen 41, die erfindungsgemäß als mindestens eine Doppel-Satellitenantenne 73 ausgebildet sind, sowie deren Positionsdaten lässt sich zum einen die genaue Lage im Gelände und zum anderen jede Abweichung von einer vorgegebenen Lage ermitteln. Alternativ zu der Anordnung von zwei einzelnen Satellitenantennen 41 ist auch die Installation einer Doppel-Satellitenantenne 73 möglich, die in Fig. 21 schematisch dargestellt ist.

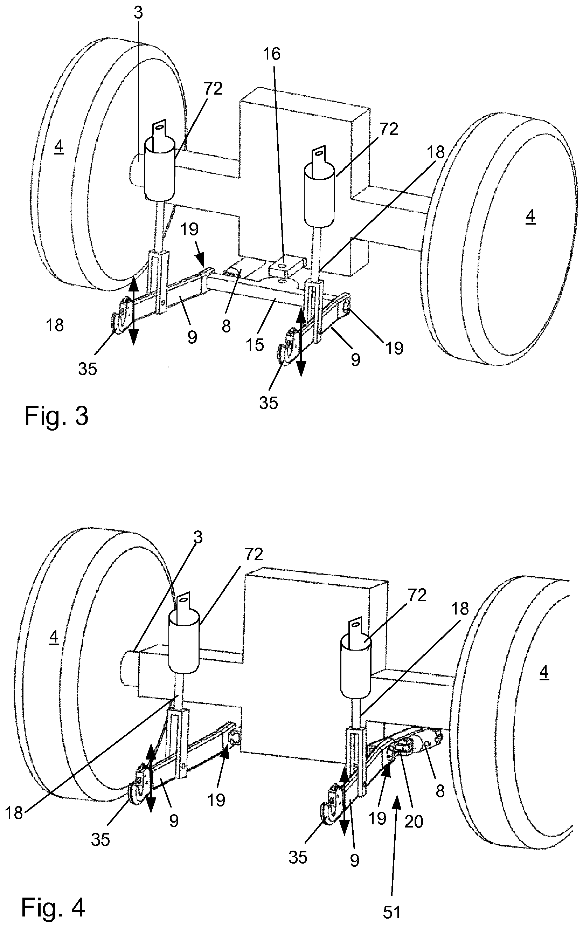

Mittels einer Seitenverschiebung ist eine quer bzw. senkrecht zur Fahrtrichtung gemäß dem Pfeil 14 ausgerichtete Verlagerung des Anbaugerätes 11 gemäß dem Doppelpfeil 46 möglich, um ein seitliches Abweichen des Zugfahrzeugs 1 auszugleichen. Die rechnergesteuerte Antriebe umfassende Seitenverschiebung, die aus einer Mittenlage in zwei entgegengesetzte Richtungen erfolgen kann, kann sowohl dem Zugfahrzeug 1 als auch dem Anbaugerät 11 bzw. der Anhängevorrichtung 27 zugeordnet werden. Die Ansteuerung der Antriebe, die beispielsweise als Kolben-/Zylindereinheiten, Stellspindeln oder dergleichen ausgebildet sein können, erfolgt über die Rechnersteuerung 50, an der sämtliche Ist- und Soll-Daten vorliegen. Im Weiteren kann nach einer entsprechenden Aufhängung, die durch den Fachmann zu realisieren ist, eine Verdrehung des Anbaugerätes 11 gemäß dem Doppelpfeil 56 vorgenommen werden, um das Anbaugerät in einer vorgegebenen Lage zu Untergrund, beispielsweise parallel oder lotrecht dazu, über die Nutzfläche 57 zu bewegen. Vorstehend ist beispielsweise die Lageänderung des Anbaugerätes 11 im Wesentlichen durch eine Längenänderung der Unterlenker 9 beschrieben. Selbstverständlich kann die Lageänderung des Anbaugerätes 11 auch mittels einer Lageänderung der Unterlenker 9 erreicht werden. Wichtig ist lediglich, dass der Befestigungspunkt am freien, dem Anbaugerät 11 zugeordneten Ende des Unterlenkers 9, der mit einem Anhängemaul 35 bestückt sein kann, zu verlagern ist. Diese Veränderung des Befestigungspunktes kann durch eine Verschiebung des gesamten Unterlenkers 9 erzielt werden, wie beispielsweise der Darstellung gemäß Fig. 3 zu entnehmen ist.

Nach Fig. 3 sind die zueinander beabstandeten Unterlenker 9 über eine Quertraverse 15 miteinander verbunden, wobei die Quertraverse 15 in etwa mittig die Quertraverse 15 in etwa mittig mittels eines nicht dargestellten Bolzens an einer Öse 16 der Zugfahrzeugs 1 schwenkbar festgelegt ist. Die Quertraverse 15 ist auch beweglich mit den zugeordneten Enden des Unterlenkers 9 gekoppelt. Im Bereich des einen Unterlenkers 9 greift der doppelt wirkende Hydraulikzylinder 8 an, dessen Längenänderung eine Verschwenkung der Quertraverse 15 in der Öse 16 und damit eine Lageveränderung der freien Enden der Unterlenker 9, an denen das Anbaugerät 11 befestigt ist, bewirkt, womit ein Verschwenken des Anbaugerätes 11 einhergeht, um dessen Achse 12 rechtwinklig zur Fahrtrichtung gemäß dem Pfeil 14 auszurichten. Der Hydraulikzylinder 8 ist mit seinem einen Ende an dem Zugfahrzeug 1 und mit seinem anderen Ende an der Quertraverse 15 befestigt. Zum Anheben der Unterlenker 9 sind Hubstreben 18 vorgesehen. Die Hubstreben 18 sind zum Ausgleich einer Höhenlage jeweils mit einer Hydraulikzylinder-Anordnung 72 verbunden, die bzw. deren zugeordnete Schaltventile mit der Rechnersteuerung 50 gekoppelt sind. mittels der Hydraulikzylinder-Anordnung 72, die Bestandteil einer Verstelleinrichtung ist, und der Hubstreben 18 ist eine Änderung der Höhenlage der freien Enden der Unterlenker 9 bzw. des jeweiligen Anhängemauls 35 möglich, um ein Anbaugerät 11 bzw. eine Anhängevorrichtung 27, das bzw. die in einer bestimmten Höhenlage zum Untergrund ausgerichtet sein soll und keine eigenen Räder aufweist, exakt in der entsprechenden Höhe zu platzieren, wobei sich durch die Längenänderung der Unterlenker 9 Differenzen ergeben können. Wird also der eine Unterlenker 9 gegenüber dem anderen Unterlenker 9 verlängert oder verkürzt, kann damit eine Änderung in der Parallelität des Anbaugerätes 11 bzw. der Anhängevorrichtung 27 zum Untergrund einhergehen, wobei diese Abweichungen von der Ausrichtung zum Untergrund durch eine entsprechende Verstellung der Höhenlage des Anhängemauls 35 mittels der jeweiligen Hydraulikzylinder-Anordnung 72 ausgleichbar ist. Die notwendige Höhenverstellung des Unterlenkers 9 in Relation zu dessen Längenänderung lässt sich berechnen und/oder empirisch ermitteln und die entsprechenden Korrekturdaten können an der Rechnersteuerung 50 bereitgestellt werden. Es ist auch möglich, die Rechnersteuerung mit Messsensoren zu verbinden, die entweder an den Unterlenkern 9, insbesondere im Bereich der Anhängemäuler 35, oder an der Anhängevorrichtung 27 oder an dem Anbaugerät 11, bevorzugt rechts- und linksseitig zur Mitte versetzt, angebracht werden. Die Messsensoren ermitteln in beliebiger Weise Daten bezüglich ihres Abstandes zum Boden und stellen diese an der Rechnersteuerung 50 zur Verfügung, die daraufhin eine entsprechende Verstellung der einen oder anderen oder beider Hydraulikzylinder-Anordnung/en 72 bewirkt, damit die Messsensoren einen vorgegebenen, vorzugsweise den gleichen Abstand zum Untergrund einnehmen und entsprechende Messdaten liefern. Dementsprechend ist es auch möglich, die rechnergesteuerte Verstelleinrichtung zur Einstellung einer Höhenlage der Anhängevorrichtung 27 oder dem Anbaugerät 11 zuzuordnen, beispielsweise zwischen zwei relativ zueinander verstellbaren Vorrichtungsteilen entsprechende Hydraulikzylinder-Anordnungen, die nicht näher dargestellt sind, anzuordnen.

Gemäß Fig. 4 sind die Unterlenker 9 über jeweils ein zugeordnetes Gelenk 19 mit einem Führungselement 20 verbunden, das in einer zugfahrzeugseitigen Führungsschiene 21 in Längsrichtung des Zugfahrzeugs 1 verschiebbar gelagert ist, wobei mindestens eines der Führungselemente 20 mit einem der doppelt wirkenden Hydraulikzylinder 8 in Verbindung steht. Selbstverständlich ist es bei dieser Ausgestaltung möglich, denen einen Unterlenker 9 bzw. das zugeordnete Führungselement 20 zu fixieren und den anderen Unterlenker 9 verschiebbar zu lagern oder auch beide Unterlenker 9 mittels zugeordneter Hydraulikzylinder 8 verschiebbar anzuordnen. Im Weiteren sind die Unterlenker 9, wie bereits beschrieben, mit den Hydraulikzylinder-Anordnungen 72 gekoppelt, um eine rechnergesteuerte Höhenverstellung vornehmen zu können.

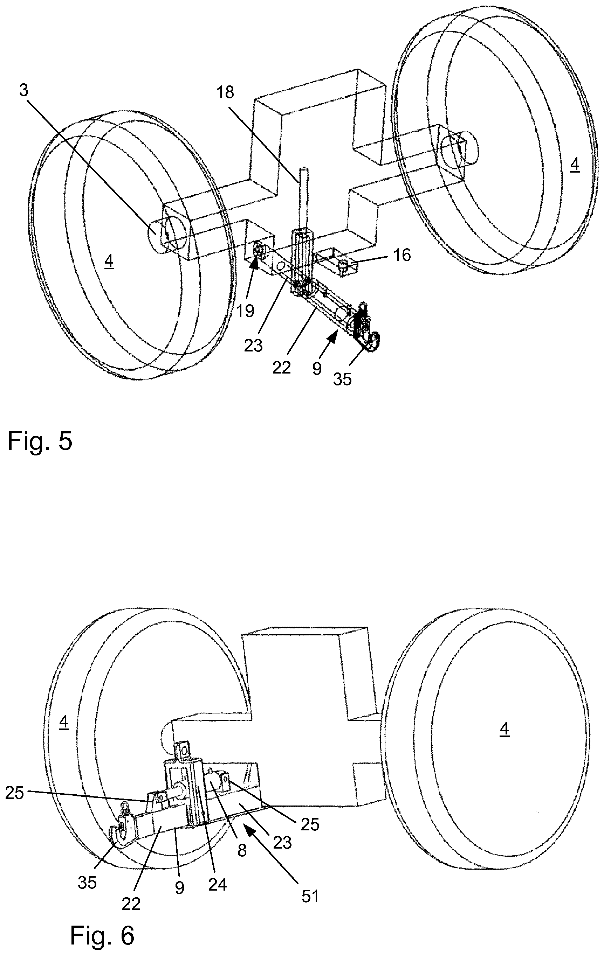

Nach Fig. 5 ist der Hydraulikzylinder 8 innerhalb des teleskopierbaren Unterlenkers 9 angeordnet, um ein in Richtung des Anbaugerätes 11 weisendes Schiebeteil 22 gegenüber einem zugfahrzeugfesten Teil 23 des Unterlenkers 9 zu verschieben, wobei die Hubstrebe 18 an dem zugfahrzeugfesten Teil 23 des schwenkbar an dem Zugfahrzeug angeordneten Unterlenkers 9 angeordnet ist.

Gemäß Fig. 6 ist der Hydraulikzylinder 8 oberhalb des teleskopierbaren Unterlenkers 9 angeordnet, um das in Richtung des Anbaugerätes 11 weisende Schiebeteil 22 gegenüber dem zugfahrzeugfesten Teil 23 des Unterlenkers 9 zu verschieben. Zur Befestigung des Hydraulikzylinder 8 sind Halteansätze 25 an dem Schiebeteil 22 und an den Teil 23 des Unterlenkers 9 angeordnet, wobei der Hydraulikzylinder 8 mittels Verbindungsbolzen mit den Halteansätzen 25 gekoppelt ist. Das Schiebeteil 22 ist in dem feststehenden Teil 23 geführt. Die Hubstrebe 18 ist an einer an dem zugfahrzeugfesten Teil 23 befestigten Halterung 24 angeordnet ist.

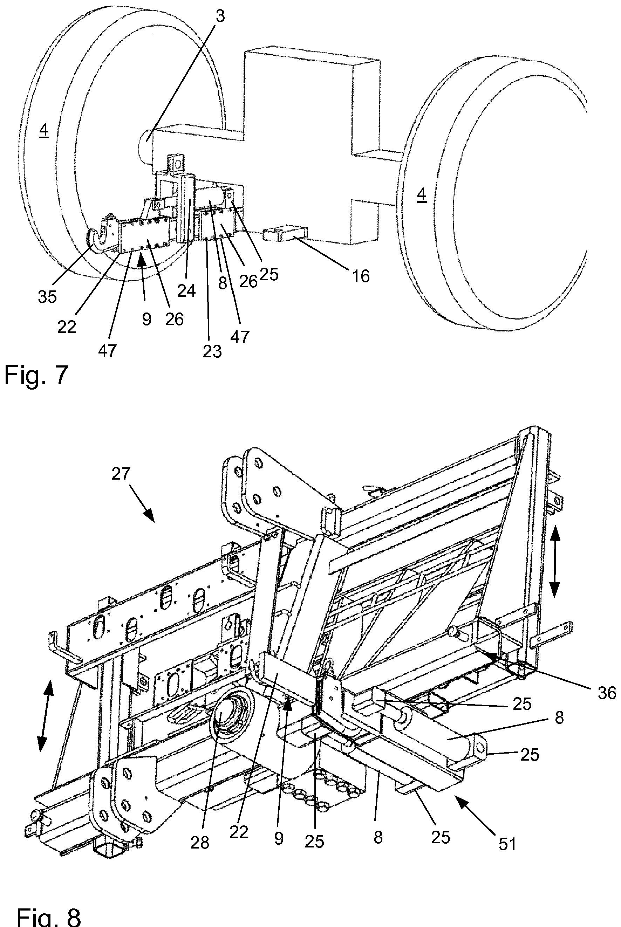

Entsprechend Fig. 7 sind das Richtung des Anbaugerätes 11 weisende Schiebeteil 22 und das zugfahrzeugfeste Teil 23 des Unterlenkers 9 jeweils zweiteilig ausgeführt und weisen jeweils eine Klemmschelle 26 mit Verschraubungen 47 auf, wobei an den Klemmschellen 26 über die Halteansätze 25 der Hydraulikzylinder 8 angreift, um das freie Ende des Unterlenkers 9 gegenüber dessen schwenkbar gelagertem Ende in Längsrichtung des Zugfahr-zeugs 1 zu verstellen. Die Halterung 24 für die Hubstrebe 18 ist derart angebracht, dass sie nicht längsverschoben wird. Aufgrund der Klemmschellen 26 ist das in Richtung des Anbaugerätes 11 weisende Schiebeteil 22 und das zugfahrzeugfeste Teil 23 jeweils in seiner Länge verstellbar, und zwar können nach dem Lösen der Verschraubungen 47 das Schiebeteil 22 und das Teil 23 in ihrer Länge variiert werden, um den Abstand des Anbaugerätes 11 oder einer Anhängevorrichtung 27 zu dem Zugfahrzeug 1 in einer Grundeinstellung derart einzustellen, dass ein hinreichender Abstand vorliegt, um das in Richtung des Anbaugerätes 11 weisende Schiebeteil 22 gegenüber dem zugfahrzeugfesten Teil 23 des Unterlenkers 9 mittels des Hydraulikzylinders 8 zu verschieben.

Die Anhängevorrichtung 27, beispielsweise für eine Pflanzvorrichtung als Anbaugerät 11 oder dergleichen, umfasst gemäß Fig. 8 eine mittig angeordnete Drehvorrichtung 28, um ein vertikales Ausrichten und Setzen der Pflanzen, Stäbe oder Pfähle mittels eines Verdrehens, wie durch den Doppelpfeil in Fig. 15 angedeutet ist, zu ermöglichen. Durch ein Verdrehen in einer oder zwei Achsen, die senkrecht zueinander ausgerichtet sind, ist beispielsweise auch ein horizontales Bearbeiten des Bodens möglich, vorzugsweisen zum Anlegen von Terrassen für definierte Fahrspuren oder zum Einebnen mittels beliebiger geeignete Bodenbearbeitungsgeräte. Der Anhängevorrichtung 27 sind Hydraulikzylinder 8 zugeordnet, um das Schiebeteil 22 des Unterlenkers 9 gegenüber dem feststehenden Teil 23 des Unterlenkers 9 zu verschieben, wobei das feststehende Teil 23 das Schiebeteil 22 umgreift. Die Hydraulikzylinder 8 können selbstverständlich entgegen der Darstellung nach Fig. 8 rechts und linksseitig der Drehvorrichtung 28 angeordnet sein, um einen Halterahmen 36 der Anhängevorrichtung 27 gegenüber dem Zugfahrzeug 1 in seiner Lage zu verstellen. Hierbei ist es auch möglich, die Unterlenker 9 selbst nicht in ihrer Länge zu verstellen und die Hydraulikzylinder 8 zwischen dem Halterahmen 36 und dem mit der Anhängevorrichtung 27 zu verbindenden Anbaugerät 11 anzuordnen, um die Lage des Anbaugerätes 11 relativ zur Anhängevorrichtung 27 zu verändern.

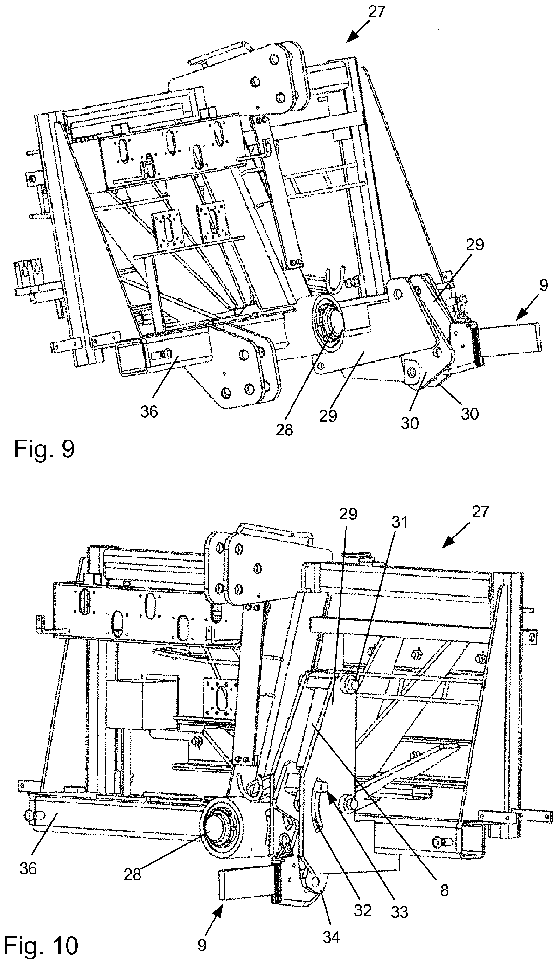

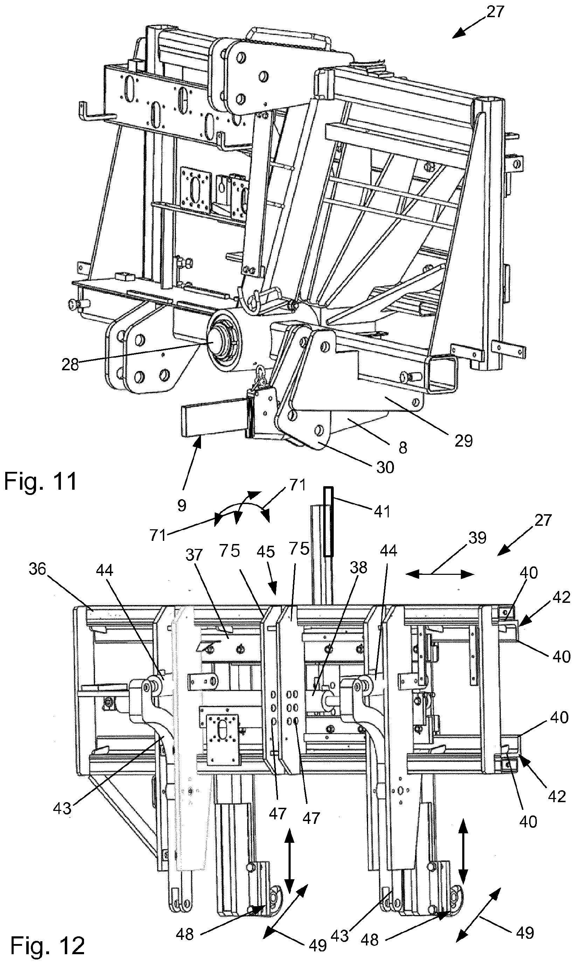

Nach Fig. 9 und Fig. 11 ist die Anhängevorrichtung 27 über Befestigungsflansche 29 mit den Unterlenkern 9 des Zugfahrzeugs 1 verbunden und über bewegliche Innenteile 30 wird die Anhängevorrichtung 27 bzw. deren Halterahmen 36 mittels des Hydraulikzylinders 8 in seiner Lage in Längsrichtung zur Zugmaschine 1 verändert. Auch in dieser Ausgestaltung ist die Anbringung der Hydraulikzylinder 8 und der Innenteile 30 beiderseits der Drehvorrichtung 28 möglich und für eine schnelle Verstellung vorteilhaft, wenn die beidseitigen Hydraulikzylinder 8 gegenläufig angesteuert werden.

Gemäß Fig. 10 ist die Anhängevorrichtung 27 über die Befestigungsflansche 29 mit dem Zugfahrzeug 1 schwenkbar verbunden und weist ein Gelenk 31 sowie eine in bogenförmige Langlöcher 32 eingreifende Bolzenführung 33 auf. Der Hydraulikzylinder 8 erstreckt sich zwischen dem Gelenk 31 und der Bolzenführung 33, die wiederum mit einem mit dem Unterlenker 9 verbundenen Schiebeteil 34 gekoppelt ist. Zur Verlagerung der Anhängevorrichtung 27 bzw. des Halterahmens 36 der Anhängevorrichtung 27 in Richtung der Längsachse des Zugfahrzeugs 1 und relativ zu den Unterlenkern 9 wird das Schiebteil 34 in seiner Lage verändert.

Die Anhängevorrichtung 27 nach Fig. 12 ist im Wesentlichen aus dem Halterahmen 36 und einem demgegenüber verschiebbaren Anbaurahmen 37 zusammengesetzt, um das Anbaugerät 11 mittels eines zwischen dem Halterahmen 36 und dem Anbaurahmen 37 wirksam angeordneten Einstellzylinders 38 gemäß dem Doppelpfeil 39 senkrecht zur Fahrzeuglängsachse beziehungsweise quer zur Fahrtrichtung zu verschieben. Diese Verschiebung bezeichnet der Fachmann auch als eine Seitenverschiebung und ist nicht nur an der Anhängevorrichtung realisierbar, vielmehr kann auch das Anbaugerät 11 gegenüber der Anhängevorrichtung 27 oder gegenüber dem Zugfahrzeug 1 seitlich aus einer Mittelage heraus in die eine oder andere Richtung verschoben werden. Es ist auch eine entsprechende Seitenverschiebung innerhalb des Anbaugerätes 11 durch eine entsprechende Relativbewegung von verlagerbaren Teilen des Anbaugerätes 11 möglich. Mit dieser Verschiebebewegung kann beispielsweise einem Verfahren bzw. Triften des Zugfahrzeuges 1, beispielsweise an einem Hang, entgegengewirkt werden, damit das Anbaugerät 11 seine vorgegebene Soll-Linie, also eine ideale Bearbeitungslinie, die auf einem zu bearbeitenden Feld parallel zu weiteren Bearbeitungslinien verläuft, nicht verlässt. Zur Führung des Anbaurahmens 37 an dem Halterahmen 36 weist der Halterahmen 36 sich im Wesentlichen über dessen gesamte Breite erstreckende Winkelprofile 42 auf, deren einer Schenkel 40 an dem Halterahmen 36 befestigt ist und deren anderer Schenkel 40 den Anbaurahmen 37 verschiebbar lagert. Selbstverständlich können die Winkelprofile 42 auch durch Rohrprofile oder dergleichen ersetzt werden. Zur Erfassung von Ist-Positionsdaten ist der Anhängevorrichtung eine Satellitenantenne 41 zugeordnet. Wird ein Verfahren oder ein Triften, des Zugfahrzeugs 1 mit der Anhängevorrichtung 27 bzw. dem Anbaugerät 11, auch am Hang, durch Ortungsdaten des Satelliten-Navigationssystems , das über die Rechnersteuerung 50 und das Steuergerät 6 mit der Hydraulikanlage verbunden ist, festgestellt, erfolgt eine Ansteuerung des Einstellzylinders 38, um mit einer Verschiebung des Anbaurahmens 37 gegenüber dem Halterahmen 36 eine Ausgleichsbewegung zu schaffen, damit das Anbaugerät 11 bei der Bearbeitung seine vorgegebene Soll-Linie 55 einhält.

Um zum einen einen größeren Abstand zwischen dem Heck des Zugfahrzeugs 1 und der Anhängevorrichtung 27 bzw. dem mindestens einen Anbaugerät 11 zu schaffen und zum anderen ein relativ schnelles Verlagern der Anhängevorrichtung 27 bzw. des daran befestigten Anbaugerätes 11 gegenüber dem Zugfahrzeug 1 zu ermöglichen, um einem Versatz entgegenzuwirken, bzw. diesen Versatz zwischen der Fahrtrichtung des Zugfahrzeugs 1 und der einzuhaltenden Arbeitsrichtung auszugleichen oder das Verfahren entlang einer vorgegeben Soll-Linie 55, beispielsweise zum Erreichen bestimmter vorgegebene Punkte auf der zu bearbeitenden Fläche, sicherzustellen, sind an den Halterahmen 36 Befestigungsarme 43 mit endseitigen Einhängevorrichtungen 48 mittels hydraulischer Verstellzylinder 44 gemäß den Doppelpfeilen 49 verschwenkbar gelagert. Die Befestigungsarme 43 sind nach der Art zweiarmiger Hebel gelagert, wobei an einem Ende der jeweils zugeordnete Verstellzylinder 44 angreift und das andere Ende zur Kopplung mit dem jeweiligen Unterlenker 9, der nicht zwingend verstellbar sein muss, ausgebildet ist. Selbstverständlich sind die Verstellzylinder 44 an die Hydraulikanlage 5 oder eine separate Hydraulikanlage angeschlossen. Um den Oberlenker 10 des Zugfahrzeugs 1 zu befestigen, ist zwischen den Befestigungsarmen 43 eine Befestigungsvorrichtung 45 vorgesehen, die im Wesentlichen zwei zueinander beabstandete Flanschbleche 75 mit Rasterbohrungen 47 für Steckbolzen umfasst. Selbstverständlich können auch rechnergesteuerte Verstelleinrichtungen zum Verdrehen der Anhängevorrichtung 27 bzw. des daran befestigten Anbaugerätes 11 in Richtung des einen und/oder anderen Doppelpfeils 71 vorgesehen sein. Zwischen den Befestigungsarmen 43 ist ein ausreichender Freiraum, beispielsweise zum Durchführen eines Zapfwellenantriebs oder dergleichen zu dem Anbaugerät 11, vorgesehen. Die Einhängevorrichtungen 48 lassen sich beliebig ausgestalten und sind insbesondere an das Anbaugerät 11 anpassbar.

Vorstehend ist die Lageänderung des Anbaugerätes 11 durch eine Längen- oder Lagenänderung der Unterlenker 9 beschrieben. Selbstverständlich kann die Lageänderung des Anbaugerätes 11 auch mittels einer Lageänderung der Befestigungsarme 43 erreicht werden, indem diese mittels der Verstellzylinder 44 verschwenkt werden, um die Anhängevorrichtung 27 gegenüber dem Zugfahrzeug 1 zu verschwenken und derart eine Lageänderung des Anbaugerätes 11 zu dem Zugfahrzeug 1 zu bewirken damit das Anbaugerät 11 bei dem Verfahren die vorgegebene Soll-Linie 55 einhält. Gleichzeitig erfolgt eine Seitenverschiebung entweder der Anhängevorrichtung 27 oder zumindest eines Teils der Anhängevorrichtung 27 oder des Anbaugerätes 11 quer zur Fahrtrichtung, beispielsweise ebenfalls mittels Verstellzylinder oder dergleichen Antriebe. Zur Beaufschlagung der Verstellzylinder 44 und/oder des Einstellzylinders 38 kann die Kommunikation mit dem Steuergerät 6 oder einem separaten Steuergerät, das die Funktionalität des im Zusammenhang mit dem Zugfahrzeug 1 beschriebenen Steuergerätes 6, das eine Rechnersteuerung 50 umfasst, aufweist, erfolgen, und das zur Speicherung von Soll-Daten und zur Auswertung von in einem Speichermodul 58 hinterlegten Ist-Daten ausgebildet ist und mindestens mit dem dem Zugfahrzeug 1 zugeordneten mehrachsigen Neigungssensor 17 oder mindestens einem weiteren Neigungssensor und/oder mindestens dem die Satellitenantennen 41 umfassenden SatellitenNavigationssystem gekoppelt ist. Die dargestellten Bauweisen sind als Beispiele zu verstehen. Wichtig sind die Verstellbarkeit, insbesondere in vier Richtungen von zwei senkrecht zueinander verlaufende Achsen, nämlich gemäß einer Soll-Linie 55, also im Wesentlichen in und gegen eine Fahrtrichtung sowie senkrecht dazu verlaufende Seitenverschiebungen nach rechts und/oder links. Eine zusätzliche Exaktheit wird durch die Verstellbarkeit in einer oder zwei Drehachsen erzielt. Wobei es im Wesentlichen unerheblich ist, ob die hierfür erforderlichen Verstelleinrichtungen 51 dem Zugfahrzeug 1, dem Anbaugerät 11 und/oder der Anhängevorrichtung 27 zugeordnet sind.

Die Befestigungsarme 43 der Anhängevorrichtung 24 können auch dem Anbaugerät 11 zugeordnet werden und die Unterlenker 9 werden unmittelbar mit einsprechenden Befestigungseinrichtungen der Anhängevorrichtung 24 verbunden.

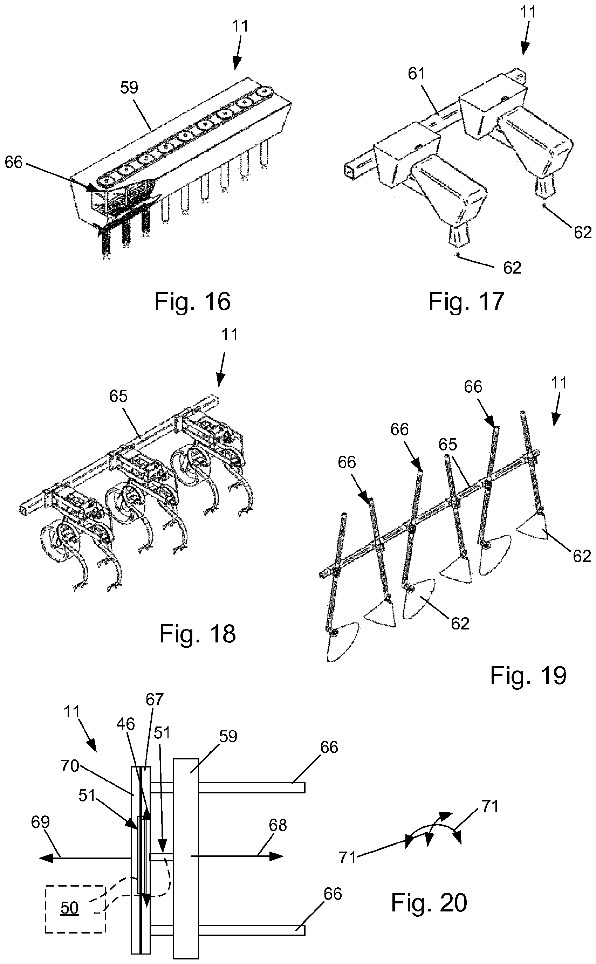

Die Fig. 16 bis 20 zeigen Anbaugeräte11, die an ein Zugfahrzeug 1 anhängbar sind. Das als Düngemittel- oder Kompost-Austragsgerät 59 ausgebildete Anbaugerät 11 umfasst beispielsweise Austragsrohre 60, um entsprechend den Soll-Linien 55 Bahnen von Düngemittel oder Kompost auf der Nutzfläche 57 auszutragen, wobei ein als eine Dosierschnecke ausgeführter Aktor 66, der mit der Rechnersteuerung 50 gekoppelt ist, ein mengengesteuertes Austragen von Düngemittel oder Kompost sicherstellt. Um an vorgegebenen und in dem Speichermodul 58 der Rechnersteuerung 50 hinterlegten Pflanzpunkten 60 gezielt Saatgut 61 auszubringen ist ein als Sägerät 61 ausgebildetes Anbaugerät 11 mit einem Aktor 66 zur vereinzelten und positionsgenauen Ausgabe des Saatgutes 62 ausgestattet. Ein als Spritzgerät 63 ausgebildetes Anbaugerät 11 umfasst mehrere Spritzdüsen, die durch Schirme 64 überdeckt sind, um Verwirbelungen des flüssigen Spritzmittels durch Wind zu reduzieren. Um das Spritzmittel positions- um mengengenau auszutragen ist den Spritzdüsen zumindest ein Aktor 66, beispielsweise ein Stellventil, zugeordnet, der mit der Rechnersteuerung 50 verbunden ist. Ein weiteres Anbaugerät 11 ist als Bodenbearbeitungsgerät 65 ausgebildet. Es ist für den Fachmann selbstverständlich weitere Anbaugeräte, beispielsweise Erntegeräte, in verschiedenen technischen Ausführungen vorzusehen.

Gemäß Fig. 20 ist das als Düngemittel- oder Kompost-Austragsgerät 59 ausgebildete Anbaugerät 11 an zwei sich parallel und in Längsrichtung erstreckenden Führungsmitteln 66 verschiebbar gelagert, die von einem Querbalken 67 abgehen. Zwischen dem Querbalken 67 und dem Düngemittel- oder Kompost-Austragsgerät 59 ist eine mit der Rechnersteuerung 50 verbundene Verstelleinrichtung 51 angeordnet, die zur Verschiebung des Düngemittel- oder Kompost-Austragsgerätes 59 relativ zu dem Querbalken 67 und damit auch zu dem Zugfahrzeug 1 ausgebildet ist. Die beispielsweise einen motorischen Antrieb umfassende Verstelleinrichtung 51 verschiebt das Düngemittel- oder Kompost-Austragsgerät 59 in Richtung des Pfeils 68 in Abhängigkeit von der Fahrgeschwindigkeit des Zugfahrzeuges 1, das sich in Richtung des Pfeils 69 bewegt. Demnach verharrt das Düngemittel- oder Kompost-Austragsgerät 59 in seiner Position, um gezielt an vorgegebenen Pflanzpunkten 60 Düngemittel oder Kompost aus zu tragen. Die Verstelleinrichtung 51 kann auch eine Änderung in der Höhenlage zu dem Untergrund bzw. der Nutzfläche 57 durch eine Verschiebung des Düngemittel- oder Kompost-Austragsgerätes 59 relativ zu dem Querbalken 67 bewirken.

Parallel zu dem Querbalken 67 ist ein mit dem Zugfahrzeug 1 oder der Anhängevorrichtung 27 verbundener Querträger 70 angeordnet, wobei der Querbalken 67 mittels der mit der Rechnersteuerung 50 verbundenen Verstelleinrichtung 51 relativ zu dem Querträger 70 verschiebbar ist, um eine Seitenverschiebung gemäß dem Doppelfeil 46 zu realisieren, damit die Pflanzpunkte 60 relativ genau anfahrbar sind.

Wie insbesondere der Fig. 15 zu entnehmen ist, wird die zu bearbeitende Nutzfläche 57 mittels bekannter Satelliten-Antennen, sowie zugeordneter Empfänger und Rechner durch Aufnehmen von Messpunkten vermessen, falls noch keine Daten vorhanden sind, und in Soll-Linien 55, die insbesondere kreuzförmig zueinander verlaufen, aufgeteilt, so dass beispielsweise an den Kreuzungen der Soll-Linien 55 Pflanzpunkte 60 gebildet sind, wobei es für den Fachmann ersichtlich ist, dass er die Aufteilung in Abhängigkeit von der Art der Bewirtschaftung bzw. Bepflanzung vornimmt und zwar auch derart, dass eine Bearbeitung in Bahnen einer Richtung oder eine kreuzförmige Bearbeitung der Nutzfläche 57 möglich ist. Die Pflanzpunkte 60 weisen selbstverständlich an die Pflanze angepasste Abstände auf. Auch ist eine Verdrehung in einer oder zwei Achsen gemäß der Doppelpfeile 71 möglich, um eine exakte Ausrichtung zum Untergrund zu bewerkstelligen. Selbstverständlich lassen sich auch Anbaugeräte 11 zur Ausbringung einzelner Saatkörner oder Pflanzen oder dergleichen nach dem erläuterten Prinzip gestalten.

Das Anbaugerät 11 oder auch mehrere an dem Zugfahrzeug 1 angebrachte Anbaugeräte 11 werden durch eine rechnergesteuerte Verlagerung gemäß der Doppelpfeile 46, 53, 56 in Fahrtrichtung, quer zur Fahrtrichtung und/oder um eine Drehachse derart positionsgenau ausgerichtet, dass unabhängig von der Ausrichtung des Zugfahrzeugs 1 vorgegebene Bearbeitungsbahnen 66 eingehalten und Pflanzpunkte 60 angefahren werden, wobei die Rechnersteuerung entsprechende Soll-Daten mit Ist-Daten von den unterschiedlichen Sensoren und der Satelliten-Steuerung abgleicht und die Verstelleinrichtung 51 zur Einhaltung der Bearbeitungsbahnen 66 und Pflanzpunkte 60 ansteuert. Durch die Verdrehung des Anbaugerätes 11 zum Untergrund gemäß dem Doppelpfeil 56 ist eine Ausrichtung beispielsweise parallel zum Untergrund für die Bodenbearbeitung oder das Austragen von Spritzmittel, Kompost oder Düngemittel oder dergleichen, oder eine lotrechte Ausrichtung für das Setzen von Pflanzen, das Einbringen von Pfählen oder Stäben oder dergleichen möglich. Sämtliche Daten sind abrufbar gespeichert, insbesondere in einer der Rechnersteuerung 50 zugeordneten oder zuordenbaren Speichereinrichtung oder einem entsprechenden Speichermedium bzw. -baustein.

Die Doppel-Satellitenantenne 73 nach Fig. 21, die auch als Dipol-Satellitenantenne zu bezeichnen ist, umfasst die beiden in einem definierten Abstand zueinander angeordneten bzw. in einer definierten Lage ausgerichteten Antennenpole 74, die eine vereinfachte und positions- sowie lagegenaue Positionsbestimmung und Navigation mit bekannten Systemen sicherstellen. Selbstverständlich können die Antennenpole 74 in einem nicht dargestellten Gehäuse untergebracht sein. Der bevorzugte Arbeitsbereich der insbesondere linear polarisierten Doppel-Satellitenantenne 73 entspricht dem Frequenzbereich von GPS- oder Galileo -Frequenzen. Selbstverständlich ist keine ausschließliche Beschränkung auf das GPS-System erforderlich, vielmehr kann mit jedem beliebigen Satellitennavigationssystem, beispielsweise GLONASS (GLObal NAvigation Satellite System) der Russischen Föderation, Galileo der Europäischen Union oder Beidou aus China, gearbeitet werden.

**Bezugszeichen**

| | | | |
|---|---|---|---|
| 1. | Zugfahrzeug | 28. | Drehvorrichtung |
| 2. | Vorderachse | 29. | Befestigungsflansch |
| 3. | Hinterachse | 30. | Innenteil |
| 4. | Rad | 31. | Gelenk |
| 5. | Hydraulikanlage | 32. | Langloch |
| 6. | Steuergerät | 33. | Bolzenführung |
| 7. | Ventilsteuerung | 34. | Schiebeteil |
| 8. | Hydraulikzylinder | 35. | Anhängemaul |
| 9. | Unterlenker | 36. | Halterahmen |
| 10. | Oberlenker | 37. | Anbaurahmen |
| 11. | Anbaugerät | 38. | Einstellzylinder |
| 12. | Achse | 39. | Doppelpfeil |
| 13. | Rad von 11 | 40. | Schenkel |
| 14. | Pfeil | 41. | Satellitenantenne |
| 15. | Quertraverse | 42. | Winkelprofil |
| 16. | Öse | 43. | Befestigungsarm |
| 17. | Neigungssensor | 44. | Verstellzylinder |
| 18. | Hubstrebe | 45. | Befestigungsvorrichtung |
| 19. | Gelenk | 46. | Doppelpfeil |
| 20. | Führungselement | 47. | Verschraubung |
| 21. | Führungsschiene | 48. | Einhängevorrichtung |
| 22. | Schiebeteil | 49. | Doppelpfeil |
| 23. | Teil | 50. | Rechnersteuerung |
| 24. | Halterung | 51. | Verstelleinrichtung |
| 25. | Halteansatz | 52. | Antenne |
| 26. | Klemmschelle | 53. | Doppelpfeil |
| 27. | Anhängevorrichtung | 54. | Gyroskop |
| 55. | Soll-Linie | 65. | Bodenbearbeitungsgerät |
| 56. | Doppelpfeil | 66. | Führungsmittel |
| 57. | Nutzfläche | 67. | Querbalken |
| 58. | Speichermodul | 68. | Pfeil |
| 59. | Düngemittel- oder Kompost-Austragsgerät | 69. | Pfeil |
| | | 70. | Querträger |
| 60. | Pflanzpunkt | 71. | Doppelpfeil |
| 61. | Sägerät | 72. | Hydraulikzylinder-Anordnung |
| 62. | Saatgut | 73. | Doppel-Satellitenantenne |
| 63. | Spritzgerät | 74. | Antennenpol |
| 64. | Schirm | | |

## Patentansprüche

1. Verfahren zur Bewirtschaftung von Nutzflächen (57) im Pflanzenbau mittels eines Zugfahrzeugs (1) mit mindestens einer Hydraulikanlage, mindestens zwei Unterlenkern (9) und mindestens einem Oberlenker (10) zur Anhängung mindestens eines Anbaugerätes (11) oder einer Anhängevorrichtung (27) zur Kopplung mit mindestens einem Anbaugerät (11) unter Verwendung mindestens einer von einer Rechnersteuerung (50) angesteuerten Verstelleinrichtung (51), wobei die Rechnersteuerung (50) mittels mindestens einer an dem Zugfahrzeug (1) und/oder dem Anbaugerät (11) und/oder Anhängevorrichtung (27) angebrachten Antenne (52) erfasste Ist-Lage- und/oder Ist-Positionsdaten verarbeitet und die Verstelleinrichtung (51) von der Rechnersteuerung (50) derart angesteuert wird, dass das Anbaugerät (11) in einer Soll-Lage zu dem Zugfahrzeug (1) und/oder dem Gelände ausgerichtet wird, **dadurch gekennzeichnet, dass** die mindestens eine Antenne (52) als eine Doppel-Satellitenantenne (73) ausgebildet ist, und dass die Rechnersteuerung (50) zumindest Teile des Anbaugerätes (11) in Abhängigkeit von der Fahrgeschwindigkeit des Zugfahrzeugs derart lageverstellt, dass sie für eine vorgegebene Zeit eine ortsfeste Position bei gleichzeitiger Bewegung des Zugfahrzeugs (1) einnehmen.

2. Verfahren nach Anspruch 1, **dadurch gekennzeichnet, dass** das Anbaugerät (11) in einer Soll-Lage zu dem Zugfahrzeug (1) und/oder dem Gelände zur punktuellen Ausgabe von Düngemittel und Unkrautmittel ausgerichtet und/oder angesteuert wird.

3. Verfahren nach Anspruch 1 oder 2, **dadurch gekennzeichnet, dass** die Verstelleinrichtung (51) des Zugfahrzeugs (1) und/oder der Anhängevorrichtung (27) und/oder des Anbaugerätes (11) die Lage des Anbaugerätes (11) in Längs- und Querrichtung (Doppelpfeil 46, 53) relativ zu dem Zugfahrzeug (1) verändert.

4. Verfahren nach Anspruch 1 oder 2, **dadurch gekennzeichnet, dass** die Verstelleinrichtung (51) des Zugfahrzeugs (1) und/oder der Anhängevorrichtung (27) das Anbaugerät zumindest um die Längsachse des Zugfahrzeugs (1) verdreht (Doppelpfeil 56).

5. Verfahren nach einem der Ansprüche 1 bis 4, **dadurch gekennzeichnet, dass** die Rechnersteuerung (50) Daten eines Satelliten-Navigationssystems, mindestens eines Neigungssensors (17) und/oder eines Drehraten-Sensors (54) verarbeitet und mindestens einen Aktor (66) des Anbaugeräts und/oder die Verstelleinrichtung (51) ansteuert.

6. Verfahren nach einem der Ansprüche 1 bis 5, **dadurch gekennzeichnet, dass** die Rechnersteuerung (50) anhand der Ist-Lage- und/oder Ist-Positionsdaten und vorgegebener Soll-Daten die Steuerung des Zugfahrzeugs (1) und/oder des Anbaugerätes (11) vornimmt.

7. Verfahren nach einem der Ansprüche 1 bis 6, **dadurch gekennzeichnet, dass** die zu bewirtschaftende Nutzfläche (57) zur Festlegung von Soll-Positionsdaten mittels der Rechnersteuerung (50) anhand von Daten eines Satelliten-Navigationssystems ausgemessen wird, wobei an festgelegten Punkten der Nutzfläche (57) die positionsgenaue Bewirtschaftung vorgenommen wird.

8. Verfahren nach einem der Ansprüche 1 bis 7, **dadurch gekennzeichnet, dass** rechnergesteuert an festgelegten Punkten eine bestimmte Menge Kompost, Dünger, Saatgut oder Spritzmittel ausgebracht oder eine Pflanze oder ein Pfahl in den Untergrund eingebracht wird.

9. Verfahren nach einem der Ansprüche 1 bis 8, **dadurch gekennzeichnet, dass** die Rechnersteuerung eine Höhenverstellung der Unterlenker (9) und/oder des Anbaugerätes (11) und/oder der Anhängevorrichtung (27) bewirkt.

## Claims

1. Method of managing farmland (57) in plant cultivation by means of a towing vehicle (1) having at least one hydraulic system, at least two lower links (9) and at least one upper link (10) for attaching at least one attachment (11) or a coupling device (27) for coupling with at least one attachment (11) using at least one adjusting device (51) controlled by a computer control (50), wherein the computer control (50) processes actual orientation data and/or actual position data captured by at least one antenna (52) mounted on the towing vehicle (1) and/or on the attachment (11) and/or on the coupling device (27), and the adjusting device (51) being controlled by the computer control (50) such that the attachment (11) is aligned in a desired orientation relative to the towing vehicle (1) and/or to the terrain, **characterized in that** the at least one antenna (52) is designed as a double satellite antenna (73), and **in that** the computer control (50) adjusts at least parts of the attachment (11) in orientation as a function of the travel speed of the towing vehicle in such a way that they take up a fixed position for a predetermined time with simultaneous movement of the towing vehicle (1).

2. Method according to claim 1, **characterized in that** the attachment (11) is aligned and/or controlled in a desired orientation relative to the towing vehicle (1) and/or the terrain for the spot dispensing of fertilizer and herbicide.

3. Method according to claim 1 or 2, **characterized in that** the adjusting device (51) of the towing vehicle (1) and/or of the coupling device (27) and/or of the attachment (11) changes the position of the attachment (11) in the longitudinal and transverse directions (double arrow 46, 53) relative to the towing vehicle (1).

4. Method according to claim 1 or 2, **characterized in that** the adjusting device (51) of the towing vehicle (1) and/or of the coupling device (27) rotates the attachment at least about the longitudinal axis of the towing vehicle (1) (double arrow 56).

5. Method according to any one of claims 1 to 4, **characterized in that** the computer control (50) processes data of a satellite navigation system, of at least one inclinometer (17) and/or one rotation rate sensor (54) and actuates at least one actuator (66) of the attachment and/or the adjusting device (51).

6. Method according to any one of claims 1 to 5, **characterized in that** the computer control (50) controls the towing vehicle (1) and/or of the attachment (11) on the basis of the actual orientation data and/or actual position data and predetermined desired data.

7. Method according to any one of claims 1 to 6, **characterized in that** the farmland (57) to be managed is measured by means of the computer control (50) using data from a satellite navigation system in order to determine desired position data, the position-accurate management being carried out at defined points of the farmland (57).

8. Method according to any one of claims 1 to 7, **characterized in that** at defined points a certain amount of compost, fertilizer, seed or pesticide is applied or a plant or a pile is introduced into the subsoil under computer control.

9. Method according to any one of claims 1 to 8, **characterized in that** the computer control effects a height adjustment of the lower links (9) and/or of the attachment (11) and/or of the coupling device (27).

## Revendications

1. Procédé de gestion des surfaces cultivables (57) dans le domaine de la culture des plantes au moyen d'un véhicule tracteur (1) avec au moins un système hydraulique, au moins deux bras inférieurs (9) et au moins un bras supérieur (10) pour fixer au moins un accessoire (11) ou un dispositif de couplage (27) pour le couplage à au moins un accessoire (11) en utilisant au moins un dispositif de réglage (51) contrôlé par un contrôleur informatique (50), le contrôleur informatique (50) traitant des données d'orientation réelle et/ou de la position réelle, les données étant saisit au moyen d'au moins une antenne (52) montée sur le véhicule tracteur (1) et/ou sur l'accessoire (11) et/ou sur le dispositif de couplage (27), et le dispositif de réglage (51) étant ainsi commandé par le contrôleur informatique (50), en ce que l'accessoire (11) est aligné dans une orientation de consigne par rapport au véhicule tracteur (1) et/ou au terrain, **caractérisé en ce que** l'au moins une antenne (52) est conçue comme une antenne satellite double (73), et **en ce que** le contrôleur informatique (50) règle au moins des parties de l'accessoire (11) en position en fonction de la vitesse de déplacement du véhicule tracteur, de telle sorte que celles-ci adopte une position fixe pendant un temps prédéterminé avec déplacement simultané du véhicule tracteur (1).

2. Procédé selon la revendication 1, **caractérisé en ce que** l'accessoire (11) est aligné et/ou commandé dans une orientation de consigne par rapport au véhicule tracteur (1) et/ou au terrain pour la distribution ponctuelle d'engrais et de produits phytosanitaires.

3. Procédé selon la revendication 1 ou 2, **caractérisé en ce que** le dispositif de réglage (51) du véhicule tracteur (1) et/ou du dispositif de couplage (27) et/ou de l'accessoire (11) modifie la position de l'accessoire (11) dans les directions longitudinale et transversale (double flèche 46, 53) par rapport au véhicule tracteur (1).

4. Procédé selon la revendication 1 ou 2, **caractérisé en ce que** le dispositif de réglage (51) du véhicule tracteur (1) et/ou du dispositif de couplage (27) fait tourner l'accessoire au moins autour de l'axe longitudinal du véhicule tracteur (1) (double flèche 56).

5. Procédé selon l'une des revendications 1 à 4, **caractérisé en ce que** le contrôleur informatique (50) traite des données d'un système de navigation par satellite, d'au moins un capteur d'inclinaison (17) et/ou d'un capteur de vitesse de rotation (54) et commande au moins un actionneur (66) de l'accessoire et/ou le dispositif de réglage (51).

6. Procédé selon l'une des revendications 1 à 5, **caractérisé en ce que** le contrôleur informatique (50) effectue la commande du véhicule tracteur (1) et/ou de l'accessoire (11) sur la base des données d'orientation réelle et/ou de position réelle et des données de consigne prédéterminées.

7. Procédé selon l'une des revendications 1 à 6, **caractérisé en ce que** la surface cultivable (57) à gérer est mesurée au moyen du contrôleur informatique (50) en utilisant des données provenant d'un système de navigation par satellite afin de déterminer des données de position de consigne, la gestion exacte en position étant effectuée en des points définis de la surface cultivable (57).

8. Procédé selon l'une des revendications 1 à 7, **caractérisé en ce qu'**une certaine quantité de compost, d'engrais, de semences ou de produits phytosanitaires est appliquée ou une plante ou un pal est introduit dans le sous-sol en des points fixes sous contrôle informatique.

9. Procédé selon l'une des revendications 1 à 8, **caractérisé en ce que** le contrôleur informatique effectue un réglage en hauteur des bras inférieurs (9) et/ou de l'accessoire (11) et/ou du dispositif de couplage (27).
